# EUROPEAN PATENT SPECIFICATION

(11) **EP 3 657 877 B1**
(45) Date of publication and mention of the grant of the patent: **27.10.2021**
(21) Application number: 18842932.8
(22) Date of filing: 16.05.2018
(51) Int. Cl.: H04W 72/04, H04W 72/08

(54) **COMMUNICATION METHOD AND NETWORK DEVICE**
KOMMUNIKATIONSVERFAHREN UND NETZWERKVORRICHTUNG
PROCÉDÉ DE COMMUNICATION ET DISPOSITIF DE RÉSEAU

(30) Priority: 11.08.2017 CN 201710686698
(43) Date of publication of application: 27.05.2020
(73) Proprietor: Huawei Technologies Co., Ltd., Longgang District Shenzhen, Guangdong 518129 (CN)
(72) Inventor: WANG, Da, Shenzhen Guangdong 518129 (CN); WANG, Jian, Shenzhen Guangdong 518129 (CN); XUE, Yifan, Shenzhen Guangdong 518129 (CN); DING, Zhiming, Shenzhen Guangdong 518129 (CN)
(74) Representative: Grünecker Patent- und Rechtsanwälte PartG mbB
(86) International application number: PCT/CN2018/087041
(87) International publication number: WO 2019/029212

(56) References cited:
- CN-A- 105 284 172
- US-A1- 2016 100 430
- HUAWEI ET AL: "UE identification and HARQ combining for grant-free transmissions", 3GPP DRAFT; R1-1709992, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20170627 - 20170630 26 June 2017 (2017-06-26), XP051299217, Retrieved from the Internet: URL:http://www.3gpp.org/ftp/Meetings_3GPP_ SYNC/RAN1/Docs/ [retrieved on 2017-06-26]
- SAMSUNG: "Grant-free and grant-based UL transmissions", 3GPP DRAFT; R1-1710724, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20170627 - 20170630 26 June 2017 (2017-06-26), XP051299929, Retrieved from the Internet: URL:http://www.3gpp.org/ftp/Meetings_3GPP_ SYNC/RAN1/Docs/ [retrieved on 2017-06-26]
- LG ELECTRONICS: "Discussion on UL Transmission without Grant", 3 GPPTSG RAN WG 1 Meeting Ad-Hoc. Rl-1710327, 30 June 2017 (2017-06-30), XP051299543,
- LG ELECTRONICS: "Discussion on Grant-free Uplink Transmission", 3GPPTSG RAN WG 1 Meeting #89. Rl-1707655, 19 May 2017 (2017-05-19), XP051261995,
- NOKIA et al.: "Procedure Design for Contention based access", 3GPP TSG-RAN WG1 #86. Rl-167255, 26 August 2016 (2016-08-26), XP051140603,

## Description

### TECHNICAL FIELD

Embodiments of this application relates to communications technologies, and in particular, to a communication method and a network device.

### BACKGROUND

A future 5G communications system supports a grant-free (grant free) transmission manner of uplink data. To be specific, a terminal device may directly send uplink data to a network device on a preconfigured resource without an uplink grant (Uplink grant, UL grant) sent by the network device.

Specifically, the network device may preconfigure one resource for each group of terminal devices. A terminal device in the group may continuously and repeatedly send same uplink data to the network device on the resource without an UL grant. If the network device fails to correctly receive the uplink data sent by the terminal device on the resource, the network device may send an UL grant to the terminal device, to instruct the terminal device to resend the uplink data on a resource indicated by the UL grant. Document HUAWEI et al: "UE identification and HARQ combining for grant-free transmissions", 3GPP DRAFT; R1-1709992, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE vol. RAN WG1, no. Qingdao, China; 26 June 2017, discloses details on UE identification and HARQ combining for grant-free transmission in uplink (UL) Ultra-Reliable Low-Latency Communication (URLLC).

Document SAMSUNG: "Grant-free and grant-based UL transmissions", 3GPP DRAFT; R1-1710724, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX; FRANCE vol. RAN WG1, no. Qingdao, China; 26 June 2017 discloses resource configuration aspects for grant-free transmissions.

However, a manner of sending the UL grant by the network device is not limited in a current procedure. Therefore, when the terminal device transmits the uplink data in a grant-free transmission manner, how the network device sends the UL grant to the terminal device is an urgent problem to be resolved.

### SUMMARY

Embodiments of this application provide a communication method and a network device, to resolve a prior-art technical problem of how a network device sends a UL grant to a terminal device when the terminal device transmits uplink data in a grant-free transmission manner. The present invention is defined according to the independent claims. The dependent claims recite advantageous embodiments of the invention.

According to a first aspect, an embodiment of this application provides a communication method according to claim 1.

According to the communication method provided in the first aspect, the terminal device sends the data to the network device in a grant-free transmission manner. After detecting the RS and/or the data that are/is sent by the terminal device, the network device may have a certain period of time to attempt to correctly receive the data from the terminal device through a plurality of transmissions by the terminal device. If the network device still fails to correctly receive the data sent by the terminal device within the period of time, the network device may send the first indication information to the terminal device, to indicate the resource that is specially scheduled by the network device for the terminal device to send the data. This manner ensures accuracy of sending the first indication information by the network device.

In a possible implementation, the second time unit is the same as or different from the first time unit.

In a possible implementation, the reference signal carries first information, the first information is used to indicate that the reference signal is a reference signal sent by the terminal device to the network device for an N^{th} time, and N is a positive integer greater than or equal to 1.

If the second time unit is less than a time unit in which the terminal device sends the reference signal to the network device for an L^{th} time, the third time unit is the time unit in which the terminal device sends the reference signal to the network device for the L^{th} time, or the third time unit is an X^{th} time unit after the time unit in which the terminal device sends the reference signal to the network device for the L^{th} time.

If the second time unit is greater than or equal to a time unit in which the terminal device sends the reference signal to the network device for an L^{th} time, the third time unit is an X^{th} time unit after the first time unit, and both L and X are positive integers greater than or equal to 1.

According to the communication method provided in the first aspect, the terminal device sends the data to the network device in a grant-free transmission manner. This can restrict the network device to have an opportunity of L times of detecting the RS and/or the data that are/is sent by the terminal device, and determine a start point of a preset duration based on transmission information carried in the RS sent by the terminal device, so as to restrict a location of the third time unit. If the network device still fails to correctly receive the data sent by the terminal device within a period of time, the network device may send the first indication information to the terminal device in the third time unit, to indicate the resource that is specially scheduled by the network device for the terminal device to send the data. This manner ensures accuracy of sending the first indication information by the network device.

In a possible implementation, the reference signal carries second information, and the second information is used to indicate whether the reference signal is a reference signal sent by the terminal device to the network device for a first time.

If the reference signal is a reference signal sent by the terminal device to the network device for the first time, the third time unit is a time unit in which the terminal device sends the reference signal to the network device for an L^{th} time, or the third time unit is an X^{th} time unit after the time unit in which the terminal device sends the reference signal to the network device for the L^{th} time, and both L and X are positive integers greater than or equal to 1.

If the reference signal is not a reference signal sent by the terminal device to the network device for the first time, the third time unit is an M^{th} time unit after the first time unit, M is a positive integer greater than or equal to 1, and a value of M is the same as a value of L, or a value of M is a difference between L and 1.

According to the communication method provided in the first aspect, the terminal device sends the data to the network device in a grant-free transmission manner. This can restrict the network device to have an opportunity of L times of detecting the RS and/or the data that are/is sent by the terminal device, and determine a start point of a preset duration based on transmission information carried in the RS sent by the terminal device, so as to restrict a location of the third time unit. If the network device still fails to correctly receive the data sent by the terminal device within a period of time, the network device may send the first indication information to the terminal device in the third time unit, to indicate the resource that is specially scheduled by the network device for the terminal device to send the data. This manner ensures accuracy of sending the first indication information by the network device.

In a possible implementation, the third time unit is an M^{th} time unit after the first time unit, and M is a positive integer greater than or equal to 1.

According to the communication method provided in the possible implementation, the terminal device sends the data to the network device in a grant-free transmission manner. This can restrict the network device to have an opportunity of L times of detecting the RS and/or the data that are/is sent by the terminal device, and determine a start point of a preset duration based on a current moment if no transmission information is carried in the RS sent by the terminal device, so as to restrict a location of the third time unit. If the network device still fails to correctly receive the data sent by the terminal device within a period of time, the network device may send the first indication information to the terminal device in the third time unit, to indicate the resource that is specially scheduled by the network device for the terminal device to send the data. This manner ensures accuracy of sending the first indication information by the network device.

In a possible implementation, the method further includes:
sending, by the network device, the first indication information to the terminal device,
where the first indication information is further used to indicate that the network device correctly receives the data.

According to the communication method provided in the possible implementation, the first indication information may be used to indicate the resource for sending the data by the terminal device, or indicate that the network device correctly receives the data. Therefore, the terminal device needs to detect only one, but not two pieces of indication information. This can further lower power consumption of the terminal device.

In a possible implementation, the first time unit, the second time unit, and the third time unit are one of an orthogonal frequency division multiplexing OFDM symbol, a timeslot, a mini-slot, a subframe, and a frame.

According to the communication method provided in the possible implementation, the first time unit, the second time unit, and the third time unit can be flexible and diversified, and therefore there are more application scenarios of the communication method.

According to a second aspect, an example not being part of the present invention but helpful for understanding the present invention provides a communication method. The method includes:
sending, by a network device, first indication information; where the first indication information includes a first field and a second field, and when the first field indicates an identifier of data sent by a terminal device and the second field does not indicate a resource, the first indication information is used to indicate that the network device correctly receives the data; or when the first field is an identifier of data and the second field indicates a resource, the first indication information is used to instruct the terminal device to send the data on the resource.

According to the communication method provided in the second aspect, the first indication information may be used to indicate the resource for sending the data by the terminal device, or indicate that the network device correctly receives the data. Therefore, the terminal device needs to detect only one, but not two pieces of indication information. This can further lower power consumption of the terminal device. According to a third aspect, an an example not being part of the present invention but helpful for understanding the present invention provides a communication method. The method includes:
sending, by a network device, first indication information; where the first indication information includes a first field, and when the first field indicates an identifier of data sent by a terminal device, the first indication information is used to indicate a resource for sending the data by the terminal device; or when the first field is a preset value or
indicates an identifier of data sent by another terminal device, the first indication information is used to indicate that the network device correctly receives the data.

According to the communication method provided in the third aspect, the first indication information may be used to indicate the resource for sending the data by the terminal device, or indicate that the network device correctly receives the data.

Therefore, the terminal device needs to detect only one, but not two pieces of indication information. This can further lower power consumption of the terminal device.

According to a fourth aspect, an an example not being part of the present invention but helpful for understanding the present invention provides a communication method. The method includes:
repeatedly sending, by a terminal device, data and a reference signal to a network device; and
after sending the data and the reference signal to the network device for an L^{th} time, detecting, by the terminal device, first indication information sent by the network device, where the first indication information is used to indicate a resource for sending the data by the terminal device, and L is a positive integer greater than or equal to 1.

According to the communication method provided in the fourth aspect, the terminal device may detect the first indication information sent by the network device after sending the data and the RS to the network device for the L^{th} time, instead of the first time. This manner can reduce a quantity of times of detecting the first indication information by the terminal device, and further lower power consumption of the terminal device.

In a possible implementation, the method further includes:
retransmitting, by the terminal device, the data and the reference signal when the terminal device fails to detect the first indication information before a fourth time unit,
where the fourth time unit is greater than a time unit in which the terminal device sends the data and the reference signal to the network device for the L^{th} time.

According to the communication method provided c, when the terminal device sends uplink data in a grant-free transmission manner, the network device may have never detected the data and/or the RS sent by the terminal device. Therefore, the terminal device may retransmit the data and the RS when failing to detect the first indication information before the fourth time unit, to prevent the terminal device from endlessly detecting the first indication information, and also to improve data transmission efficiency of the terminal device.

In a possible implementation, the reference signal carries first information, the first information is used to indicate that the reference signal is a reference signal sent by the terminal device to the network device for an N^{th} time, and N is a positive integer greater than or equal to 1.

The fourth time unit is a time unit in which the terminal device sends the reference signal to the network device for a last time, or the fourth time unit is an X^{th} time unit after the time unit in which the terminal device sends the reference signal to the network device for the last time, and X is a positive integer greater than or equal to 1. According to the communication method provided in the possible implementation, the terminal device sends the data to the network device in a grant-free transmission manner.

This can restrict the network device to have an opportunity of L times of detecting the RS and/or the data that are/is sent by the terminal device, and determine a start point of a preset duration based on transmission information carried in the RS sent by the terminal device, so as to restrict a location of the third time unit for sending the first indication information. Correspondingly, the terminal device may determine, based on this, a last time unit for receiving the first indication information, and whether to retransmit the data, to prevent the terminal device from endlessly detecting the first indication information, and also to improve data transmission efficiency of the terminal device.

In a possible implementation, the reference signal carries second information, and the second information is used to indicate whether the reference signal is a reference signal sent by the terminal device to the network device for a first time.

The fourth time unit is an M^{th} time unit after a time unit in which the terminal device sends the reference signal to the network device for a last time, M is a positive integer greater than or equal to 1, and a value of M is the same as a value of L, or a value of M is a difference between L and 1.

According to the communication method provided in the possible implementation, the terminal device sends the data to the network device in a grant-free transmission manner. This can restrict the network device to have an opportunity of L times of detecting the RS and/or the data that are/is sent by the terminal device, and determine a start point of a preset duration based on transmission information carried in the RS sent by the terminal device, so as to restrict a location of the third time unit for sending the first indication information. Correspondingly, the terminal device may determine, based on this, a last time unit for receiving the first indication information, and whether to retransmit the data, to prevent the terminal device from endlessly detecting the first indication information, and also to improve data transmission efficiency of the terminal device.

In a possible implementation, the fourth time unit is an M^{th} time unit after a time unit in which the terminal device sends the reference signal to the network device for a last time, and M is a positive integer greater than or equal to 1.

According to the communication method provided in the possible implementation, the terminal device sends the data to the network device in a grant-free transmission manner. This can restrict the network device to have an opportunity of L times of detecting the RS and/or the data that are/is sent by the terminal device, and determine a start point of a preset duration based on a current moment if no transmission information is carried in the RS sent by the terminal device, so as to restrict a location of the third time unit for sending the first indication information. Correspondingly, the terminal device may determine, based on this, a last time unit for receiving the first indication information, and whether to retransmit the data, to prevent the terminal device from endlessly detecting the first indication information, and also to improve data transmission efficiency of the terminal device.

In a possible implementation, the method further includes:
when the first indication information is further used to indicate that the network device correctly receives the data, detecting, by the terminal device after sending the data and
the reference signal to the network device for a first time, the first indication information sent by the network device.

According to the communication method provided in the possible implementation, the first indication information may be used to indicate the resource for sending the data by the terminal device, or indicate that the network device correctly receives the data. Therefore, the terminal device needs to detect only one, but not two pieces of indication information. This can further lower power consumption of the terminal device.

In a possible implementation, a transmit power used by the terminal device each time is greater than or equal to a transmit power used by the terminal device previous time; and
the transmit power is a power for sending the reference signal, or the transmit power is a power for sending the reference signal and the data.

According to the communication method provided in the possible implementation, when the transmit power is the power for sending the RS, the foregoing manner can increase the transmit power of the RS, increase a probability of successfully detecting the RS by the network device, and further improve efficiency of sending the first indication information. When the transmit power is a total transmit power for sending the RS and the data, the foregoing manner can increase the power for sending the data based on the increased transmit power of the RS, and further increase a probability of correctly receiving the data by the network device.

In a possible implementation, a maximum quantity of times of retransmitting, by the terminal device, the data and the reference signal is greater than or equal to a quantity of times of repeatedly sending the data and the reference signal by the terminal device to the network device; and/or
a transmit power used when the terminal device performs retransmission is greater than or equal to a transmit power used when the terminal device repeatedly performs sending; and
the transmit power is a power for sending the reference signal, or the transmit power is a power for sending the reference signal and the data.

According to the communication method provided in the possible implementation, increasing the quantity of retransmission times can increase a probability of correctly receiving the data by the network device. When the transmit power is the power for sending the RS, the foregoing manner can increase the transmit power of the RS, increase a probability of successfully detecting the RS by the network device, and further improve efficiency of sending the first indication information. When the transmit power is a total transmit power for sending the RS and the data, the foregoing manner can increase the power for sending the data based on the increased transmit power of the RS, and further increase a probability of correctly receiving the data by the network device.

In a possible implementation, the fourth time unit is one of an orthogonal frequency division multiplexing OFDM symbol, a timeslot, a mini-slot, a subframe, and a frame.

According to the communication method provided in the possible implementation, the fourth time unit can be flexible and diversified, and therefore there are more application scenarios of the communication method.

According to a fifth aspect, an example not being part of the present invention but helpful for understanding the present invention provides a communication method. The method includes:
receiving, by a terminal device, first indication information; where
the first indication information includes a first field and a second field, and when the first field indicates an identifier of data sent by the terminal device and the second field does not indicate a resource, the first indication information is used to indicate that the network device correctly receives the data; or when the first field is an identifier of data and the second field indicates a resource, the first indication information is used to instruct the terminal device to send the data on the resource.

For beneficial effects of the communication method provided in the fifth aspect, refer to the beneficial effects described in the second aspect. Details are not described herein again.

According to a sixth aspect, an example not being part of the present invention but helpful for understanding the present invention provides a communication method. The method includes:
receiving, by a terminal device, first indication information; where
the first indication information includes a first field, and when the first field indicates an identifier of data sent by the terminal device, the first indication information is used to indicate a resource for sending the data by the terminal device; or when the first field is a preset value or indicates an identifier of data sent by another terminal device, the first indication information is used to indicate that the network device correctly receives the data.

For beneficial effects of the communication method provided in the sixth aspect, refer to the beneficial effects described in the third aspect. Details are not described herein again.

According to a seventh aspect, an example not being part of the present invention but helpful for understanding the present invention provides a communication method. The method includes:
repeatedly sending, by a terminal device, data and a reference signal to a network device; where
a transmit power used by the terminal device each time is greater than or equal to a transmit power used by the terminal device previous time.

According to the communication method provided in the seventh aspect, increasing the transmit power can increase a probability of correctly receiving by the network device. In a possible implementation, the transmit power is a power for sending the reference signal, or the transmit power is a power for sending the reference signal and the data. According to the communication method provided in the possible implementation, when the transmit power is the power for sending the RS, the foregoing manner can increase the transmit power of the RS, increase a probability of successfully detecting the RS by the network device, and further improve efficiency of sending the first indication information. When the transmit power is a total transmit power for sending the RS and the data, the foregoing manner can increase the power for sending the data based on the increased transmit power of the RS, and further increase a probability of correctly receiving the data by the network device.

According to an eighth aspect, an example not being part of the present invention but helpful for understanding the present invention provides a communication method. The method includes:
sending, by a terminal device, data and a reference signal to a network device for at least once; and
retransmitting, by the terminal device, the data and the reference signal to the network device; where
a maximum quantity of times of retransmitting, by the terminal device, the data and the reference signal is greater than or equal to a quantity of times of sending the data and the reference signal by the terminal device to the network device for at least once; and/or a transmit power used when the terminal device performs retransmission is greater than or equal to a transmit power used when the terminal device performs sending for at least once.

According to the communication method provided in the eighth aspect, increasing the retransmission times and/or the transmit power can increase a probability of correctly receiving by the network device.

In a possible implementation, the transmit power is a power for sending the reference signal, or the transmit power is a power for sending the reference signal and the data.

According to the communication method provided in the possible implementation, when the transmit power is the power for sending the RS, the foregoing manner can increase the transmit power of the RS, increase a probability of successfully detecting the RS by the network device, and further improve efficiency of sending the first indication information. When the transmit power is a total transmit power for sending the RS and the data, the foregoing manner can increase the power for sending the data based on the increased transmit power of the RS, and further increase a probability of correctly receiving the data by the network device.

According to a ninth aspect, an embodiment of this application provides a network device, including:
a processing module, configured to detect, in a first time unit, a reference signal and/or data that are/is sent by a terminal device to the network device in a second time unit; and
a sending module, configured to: when the processing module detects the reference signal and/or the data in the first time unit, send first indication information in a third time unit after the first time unit, where the first indication information is used to indicate a resource for sending the data by the terminal device.

In a possible implementation, the second time unit is the same as or different from the first time unit.

In a possible implementation, the reference signal carries first information, the first information is used to indicate that the reference signal is a reference signal sent by the terminal device to the network device for an N^{th} time, and N is a positive integer greater than or equal to 1.

If the second time unit is less than a time unit in which the terminal device sends the reference signal to the network device for an L^{th} time, the third time unit is the time unit in which the terminal device sends the reference signal to the network device for the L^{th} time, or the third time unit is an X^{th} time unit after the time unit in which the terminal device sends the reference signal to the network device for the L^{th} time.

If the second time unit is greater than or equal to a time unit in which the terminal device sends the reference signal to the network device for an L^{th} time, the third time unit is an X^{th} time unit after the first time unit, and both L and X are positive integers greater than or equal to 1.

In a possible implementation, the reference signal carries second information, and the second information is used to indicate whether the reference signal is a reference signal sent by the terminal device to the network device for a first time.

If the reference signal is a reference signal sent by the terminal device to the network device for the first time, the third time unit is a time unit in which the terminal device sends the reference signal to the network device for an L^{th} time, or the third time unit is an X^{th} time unit after the time unit in which the terminal device sends the reference signal to the network device for the L^{th} time, and both L and X are positive integers greater than or equal to 1.

If the reference signal is not a reference signal sent by the terminal device to the network device for the first time, the third time unit is an M^{th} time unit after the first time unit, M is a positive integer greater than or equal to 1, and a value of M is the same as a value of L, or a value of M is a difference between L and 1.

In a possible implementation, the third time unit is an M^{th} time unit after the first time unit, and M is a positive integer greater than or equal to 1.

In a possible implementation, the sending module is further configured to send the first indication information to the terminal device, where the first indication information is further used to indicate that the network device correctly receives the data.

In a possible implementation, the first time unit, the second time unit, and the third time unit are one of an orthogonal frequency division multiplexing OFDM symbol, a timeslot, a mini-slot, a subframe, and a frame.

For beneficial effects of the network device provided in the ninth aspect and the possible implementations of the ninth aspect, refer to the beneficial effects brought by the first aspect and the possible implementations of the first aspect. Details are not described herein again.

According to a tenth aspect, an example not being part of the present invention but helpful for understanding the present invention provides a network device, including: a sending module, configured to send first indication information; where the first indication information includes a first field and a second field, and when the first field indicates an identifier of data sent by a terminal device and the second field does not indicate a resource, the first indication information is used to indicate that the network device correctly receives the data; or when the first field is an identifier of data and the second field indicates a resource, the first indication information is used to instruct the terminal device to send the data on the resource.

For beneficial effects of the network device provided in the tenth aspect, refer to the beneficial effects described in the second aspect. Details are not described herein again. According to an eleventh aspect, an example not being part of the present invention but helpful for understanding the present invention provides a network device, including: a sending module, configured to send first indication information; where the first indication information includes a first field, and when the first field indicates an identifier of data sent by a terminal device, the first indication information is used to indicate a resource for sending the data by the terminal device; or when the first field is a preset value or indicates an identifier of data sent by another terminal device, the first indication information is used to indicate that the network device correctly receives the data.

For beneficial effects of the network device provided in the eleventh aspect, refer to the beneficial effects described in the third aspect. Details are not described herein again. According to a twelfth aspect, an example not being part of the present invention but helpful for understanding the present invention provides a terminal device, including:
a sending module, configured to repeatedly send data and a reference signal to a network device; and
a processing module, configured to: after the sending module sends the data and the reference signal to the network device for an L^{th} time, detect first indication information sent by the network device, where the first indication information is used to indicate a resource for sending the data by the terminal device, and L is a positive integer greater than or equal to 1.

In a possible implementation, the sending module is further configured to retransmit the data and the reference signal when the processing module fails to detect the first indication information before a fourth time unit, where the fourth time unit is greater than a time unit in which the terminal device sends the data and the reference signal to the network device for the L^{th} time.

In a possible implementation, the reference signal carries first information, the first information is used to indicate that the reference signal is a reference signal sent by the terminal device to the network device for an N^{th} time, and N is a positive integer greater than or equal to 1.

The fourth time unit is a time unit in which the terminal device sends the reference signal to the network device for a last time, or the fourth time unit is an X^{th} time unit after the time unit in which the terminal device sends the reference signal to the network device for the last time, and X is a positive integer greater than or equal to 1.

In a possible implementation, the reference signal carries second information, and the second information is used to indicate whether the reference signal is a reference signal sent by the terminal device to the network device for a first time.

The fourth time unit is an M^{th} time unit after a time unit in which the terminal device sends the reference signal to the network device for a last time, M is a positive integer greater than or equal to 1, and a value of M is the same as a value of L, or a value of M is a difference between L and 1.

In a possible implementation, the fourth time unit is an M^{th} time unit after a time unit in which the terminal device sends the reference signal to the network device for a last time, and M is a positive integer greater than or equal to 1.

In a possible implementation, the processing module is further configured to: when the first indication information is further used to indicate that the network device correctly receives the data, and after the sending module sends the data and the reference signal to the network device for a first time, detect the first indication information sent by the network device.

In a possible implementation, a transmit power used by the terminal device each time is greater than or equal to a transmit power used by the terminal device previous time; and the transmit power is a power for sending the reference signal, or the transmit power is a power for sending the reference signal and the data.

In a possible implementation, a maximum quantity of times of retransmitting, by the terminal device, the data and the reference signal is greater than or equal to a quantity of times of repeatedly sending the data and the reference signal by the terminal device to the network device; and/or
a transmit power used when the terminal device performs retransmission is greater than or equal to a transmit power used when the terminal device repeatedly performs sending; and
the transmit power is a power for sending the reference signal, or the transmit power is a power for sending the reference signal and the data.

In a possible implementation, the fourth time unit is one of an orthogonal frequency division multiplexing OFDM symbol, a timeslot, a mini-slot, a subframe, and a frame. For beneficial effects of the terminal device provided in the twelfth aspect and the possible implementations of the twelfth aspect, refer to the beneficial effects of the fourth aspect and the possible implementations of the fourth aspect. Details are not described herein again.

According to a thirteenth aspect, an example not being part of the present invention but helpful for understanding the present invention provides a terminal device, including:
a receiving module, configured to receive first indication information; where
the first indication information includes a first field and a second field, and when the first field indicates an identifier of data sent by the terminal device and the second field does not indicate a resource, the first indication information is used to indicate that the network device correctly receives the data; or when the first field is an identifier of data and the second field indicates a resource, the first indication information is used to instruct the terminal device to send the data on the resource.

For beneficial effects of the terminal device provided in the thirteenth aspect, refer to the beneficial effects described in the fifth aspect. Details are not described herein again. According to a fourteenth aspect, an example not being part of the present invention but helpful for understanding the present invention provides a terminal device, including:
a receiving module, configured to receive first indication information; where
the first indication information includes a first field, and when the first field indicates an identifier of data sent by the terminal device, the first indication information is used to indicate a resource for sending the data by the terminal device; or when the first field is a preset value or indicates an identifier of data sent by another terminal device, the first indication information is used to indicate that the network device correctly receives the data.

For beneficial effects of the terminal device provided in the fourteenth aspect, refer to the beneficial effects in the sixth aspect. Details are not described herein again. According to a fifteenth aspect, an example not being part of the present invention but helpful for understanding the present invention provides a terminal device, including:
a sending module, configured to repeatedly send data and a reference signal to a network device; and
a transmit power used by the terminal device each time is greater than or equal to a transmit power used by the terminal device previous time.

In a possible implementation, the transmit power is a power for sending the reference signal, or the transmit power is a power for sending the reference signal and the data.

For beneficial effects of the terminal device provided in the fifteenth aspect and the possible implementations of the fifteenth aspect, refer to the beneficial effects of the seventh aspect and the possible implementations of the seventh aspect. Details are not described herein again.

According to a sixteenth aspect, an example not being part of the present invention but helpful for understanding the present invention provides a terminal device, including: a sending module, configured to send data and a reference signal to a network device for at least once; and
the sending module is further configured to retransmit the data and the reference signal to the network device; where
a maximum quantity of times of retransmitting, by the terminal device, the data and the reference signal is greater than or equal to a quantity of times of sending the data and the reference signal by the terminal device to the network device for at least once; and/or a transmit power used when the terminal device performs retransmission is greater than or equal to a transmit power used when the terminal device performs sending for at least once.

In a possible implementation, the transmit power is a power for sending the reference signal, or the transmit power is a power for sending the reference signal and the data.

For beneficial effects of the terminal device provided in the sixteenth aspect and the possible implementations of the sixteenth aspect, refer to the beneficial effects of the eighth aspect and the possible implementations of the eighth aspect. Details are not described herein again.

According to a seventeenth aspect, an embodiment of this application provides a network device, including: a processor, a memory, a transmitter, and a receiver, where both the transmitter and the receiver are coupled to the processor, the processor controls a sending action of the transmitter, and the processor controls a receiving action of the receiver.

The memory is configured to store computer executable program code, and the program code includes an instruction; and when the processor executes the instruction, the instruction enables the network device to perform the communication method according to the first aspect and the possible implementations of the first aspect. According to an eighteenth aspect, an example not being part of the present invention but helpful for understanding the present invention provides a network device, including: a processor, a memory, a transmitter, and a receiver, where both the transmitter and the receiver are coupled to the processor, the processor controls a sending action of the transmitter, and the processor controls a receiving action of the receiver.

The memory is configured to store computer executable program code, and the program code includes an instruction; and when the processor executes the instruction, the instruction enables the network device to perform the communication method according to the second aspect.

According to a nineteenth aspect, an example not being part of the present invention but helpful for understanding the present invention provides a network device, including: a processor, a memory, a transmitter, and a receiver, where both the transmitter and the receiver are coupled to the processor, the processor controls a sending action of the transmitter, and the processor controls a receiving action of the receiver.

The memory is configured to store computer executable program code, and the program code includes an instruction; and when the processor executes the instruction, the instruction enables the network device to perform the communication method according to the third aspect.

According to a twentieth aspect, an example not being part of the present invention but helpful for understanding the present invention provides a terminal device, including: a processor, a memory, a transmitter, and a receiver, where both the transmitter and the receiver are coupled to the processor, the processor controls a sending action of the transmitter, and the processor controls a receiving action of the receiver.

The memory is configured to store computer executable program code, and the program code includes an instruction; and when the processor executes the instruction, the instruction enables the terminal device to perform the communication method according to the fourth aspect and the possible implementations of the fourth aspect. According to a twenty-first aspect, an example not being part of the present invention but helpful for understanding the present invention provides a terminal device, including: a processor, a memory, a transmitter, and a receiver, where both the transmitter and the receiver are coupled to the processor, the processor controls a sending action of the transmitter, and the processor controls a receiving action of the receiver.

The memory is configured to store computer executable program code, and the program code includes an instruction; and when the processor executes the instruction, the instruction enables the terminal device to perform the communication method according to the fifth aspect.

According to a twenty-second aspect, an example not being part of the present invention but helpful for understanding the present invention provides a terminal device, including: a processor, a memory, a transmitter, and a receiver, where both the transmitter and the receiver are coupled to the processor, the processor controls a sending action of the transmitter, and the processor controls a receiving action of the receiver.

The memory is configured to store computer executable program code, and the program code includes an instruction; and when the processor executes the instruction, the instruction enables the terminal device to perform the communication method according to the sixth aspect.

According to a twenty-third aspect, an example not being part of the present invention but helpful for understanding the present invention provides a terminal device, including: a processor, a memory, a transmitter, and a receiver, where both the transmitter and the receiver are coupled to the processor, the processor controls a sending action of the transmitter, and the processor controls a receiving action of the receiver.

The memory is configured to store computer executable program code, and the program code includes an instruction; and when the processor executes the instruction, the instruction enables the terminal device to perform the communication method according to the seventh aspect and the possible implementations of the seventh aspect. According to a twenty-fourth aspect, an example not being part of the present invention but helpful for understanding the present invention provides a terminal device, including: a processor, a memory, a transmitter, and a receiver, where both the transmitter and the receiver are coupled to the processor, the processor controls a sending action of the transmitter, and the processor controls a receiving action of the receiver.

The memory is configured to store computer executable program code, and the program code includes an instruction; and when the processor executes the instruction, the instruction enables the terminal device to perform the communication method according to the eighth aspect and the possible implementations of the eighth aspect. According to a twenty-fifth aspect, an embodiment of this application provides a network device, including at least one processing element (or chip) configured to perform the method according to the first aspect.

According to a twenty-sixth aspect, an example not being part of the present invention but helpful for understanding the present invention provides a network device, including at least one processing element (or chip) configured to perform the method according to the second aspect.

According to a twenty-seventh aspect, an example not being part of the present invention but helpful for understanding the present invention provides a network device, including at least one processing element (or chip) configured to perform the method according to the third aspect.

According to a twenty-eighth aspect, an example not being part of the present invention but helpful for understanding the present invention provides a terminal device, including at least one processing element (or chip) configured to perform the method according to the fourth aspect.

According to a twenty-ninth aspect, an example not being part of the present invention but helpful for understanding the present invention provides a terminal device, including at least one processing element (or chip) configured to perform the method according to the fifth aspect.

According to a thirtieth aspect, an example not being part of the present invention but helpful for understanding the present invention provides a terminal device, including at least one processing element (or chip) configured to perform the method according to the sixth aspect.

According to a thirty-first aspect, an example not being part of the present invention but helpful for understanding the present invention provides a terminal device, including at least one processing element (or chip) configured to perform the method according to the seventh aspect.

According to a thirty-second aspect, an example not being part of the present invention but helpful for understanding the present invention provides a terminal device, including at least one processing element (or chip) configured to perform the method according to the eighth aspect.

According to a thirty-third aspect, an embodiment of this application provides a program, where the program is used to perform the method according to the first aspect when being executed by a processor.

According to a thirty-fourth aspect, an example not being part of the present invention but helpful for understanding the present invention provides a program, where the program is used to perform the method according to the second aspect when being executed by a processor.

According to a thirty-fifth aspect, an example not being part of the present invention but helpful for understanding the present invention provides a program, where the program is used to perform the method according to the third aspect when being executed by a processor.

According to a thirty-sixth aspect, an example not being part of the present invention but helpful for understanding the present invention provides a program, where the program is used to perform the method according to the fourth aspect when being executed by a processor.

According to a thirty-seventh aspect, an example not being part of the present invention but helpful for understanding the present invention provides a program, where the program is used to perform the method according to the fifth aspect when being executed by a processor.

According to a thirty-eighth aspect, an example not being part of the present invention but helpful for understanding the present invention provides a program, where the program is used to perform the method according to the sixth aspect when being executed by a processor.

According to a thirty-ninth aspect, an example not being part of the present invention but helpful for understanding the present invention provides a program, where the program is used to perform the method according to the seventh aspect when being executed by a processor.

According to a fortieth aspect, an example not being part of the present invention but helpful for understanding the present invention provides a program, where the program is used to perform the method according to the eighth aspect when being executed by a processor.

According to a forty-first aspect, an embodiment of this application provides a program product, for example, a computer-readable storage medium, including the program according to the thirty-third aspect.

According to a forty-second aspect, an example not being part of the present invention but helpful for understanding the present invention provides a program product, for example, a computer-readable storage medium, including the program according to the thirty-fourth aspect.

According to a forty-third aspect, an example not being part of the present invention but helpful for understanding the present invention provides a program product, for example, a computer-readable storage medium, including the program according to the thirty-fifth aspect.

According to a forty-fourth aspect, an example not being part of the present invention but helpful for understanding the present invention provides a program product, for example, a computer-readable storage medium, including the program according to the thirty-sixth aspect.

According to a forty-fifth aspect, an example not being part of the present invention but helpful for understanding the present invention provides a program product, for example, a computer-readable storage medium, including the program according to the thirty-seventh aspect.

According to a forty-sixth aspect, an example not being part of the present invention but helpful for understanding the present invention provides a program product, for example, a computer-readable storage medium, including the program according to the thirty-eighth aspect.

According to a forty-seventh aspect, an example not being part of the present invention but helpful for understanding the present invention provides a program product, for example, a computer-readable storage medium, including the program according to the thirty-ninth aspect.

According to a forty-eighth aspect, an example not being part of the present invention but helpful for understanding the present invention provides a program product, for example, a computer-readable storage medium, including the program according to the fortieth aspect.

According to a forty-ninth aspect, an embodiment of this application provides a computer-readable storage medium, where the computer-readable storage medium stores an instruction, and when the instruction runs on a computer, the computer performs the method according to the first aspect.

According to a fiftieth aspect, an example not being part of the present invention but helpful for understanding the present invention provides a computer-readable storage medium, where the computer-readable storage medium stores an instruction, and when the instruction runs on a computer, the computer performs the method according to the second aspect.

According to a fifty-first aspect, an example not being part of the present invention but helpful for understanding the present invention provides a computer-readable storage medium, where the computer-readable storage medium stores an instruction, and when the instruction runs on a computer, the computer performs the method according to the third aspect.

According to a fifty-second aspect, an example not being part of the present invention but helpful for understanding the present invention provides a computer-readable storage medium, where the computer-readable storage medium stores an instruction, and when the instruction runs on a computer, the computer performs the method according to the fourth aspect.

According to a fifty-third aspect, an example not being part of the present invention but helpful for understanding the present invention provides a computer-readable storage medium, where the computer-readable storage medium stores an instruction, and when the instruction runs on a computer, the computer performs the method according to the fifth aspect.

According to a fifty-fourth aspect, an example not being part of the present invention but helpful for understanding the present invention provides a computer-readable storage medium, where the computer-readable storage medium stores an instruction, and when the instruction runs on a computer, the computer performs the method according to the sixth aspect.

According to a fifty-fifth aspect, an example not being part of the present invention but helpful for understanding the present invention provides a computer-readable storage medium, where the computer-readable storage medium stores an instruction, and when the instruction runs on a computer, the computer performs the method according to the seventh aspect.

According to a fifty-sixth aspect, an example not being part of the present invention but helpful for understanding the present invention provides a computer-readable storage medium, where the computer-readable storage medium stores an instruction, and when the instruction runs on a computer, the computer performs the method according to the eighth aspect.

According to the communication method, the terminal device, and the network device provided in the embodiments of this application, the terminal device sends the data to the network device in a grant-free transmission manner. After detecting the RS and/or the data that are/is sent by the terminal device, the network device may have a certain period of time to attempt to correctly receive the data from the terminal device through a plurality of transmissions by the terminal device. If the network device still fails to correctly receive the data sent by the terminal device within the period of time, the network device may send the first indication information to the terminal device, to indicate the resource that is specially scheduled by the network device for the terminal device to send the data. This manner ensures accuracy of sending the first indication information by the network device.

### BRIEF DESCRIPTION OF DRAWINGS

FIG. 1 is a diagram of a framework of a communications system according to an embodiment of this application;
FIG. 2 is a schematic flowchart of a communication method according to an embodiment of this application;
FIG. 3A and FIG. 3B are a schematic flowchart of another communication method according to an embodiment of this application;
FIG. 4 is a schematic flowchart of still another communication method according to an embodiment of this application;
FIG. 5A and FIG. 5B are a schematic flowchart of still another communication method according to an embodiment of this application;
FIG. 6 is a schematic flowchart of still another communication method according to an embodiment of this application;
FIG. 7 is a schematic diagram of a structure of a network device according to an embodiment of this application;
FIG. 8 is a schematic diagram of a structure of a terminal device according to an embodiment of this application;
FIG. 9 is a schematic diagram of a structure of another network device according to an embodiment of this application;
FIG. 10 is a schematic diagram of a structure of another terminal device according to an embodiment of this application; and
FIG. 11 is a block diagram of a structure of a terminal device that is a mobile phone according to an embodiment of this application.

### DESCRIPTION OF EMBODIMENTS

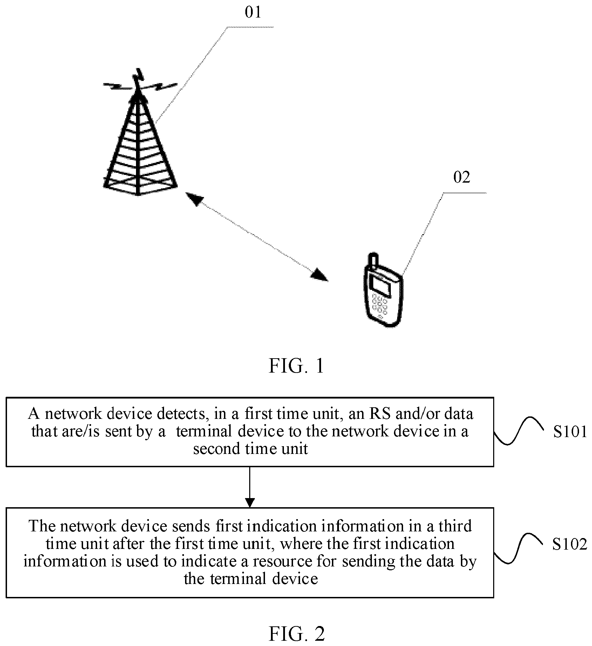

FIG. 1 is a diagram of a framework of a communications system according to an embodiment of this application. As shown in FIG. 1, the communications system includes a network device 01 and a terminal device 02. The network device 01 and the terminal device 02 may communicate in at least one air interface format.

The network device may be a base station or a radio access point, or may be a device that communicates with the terminal device over an air interface by using one or more sectors in an access network. The base station may be configured to mutually convert a received over-the-air frame and an IP packet and serve as a router between a wireless terminal and a remaining portion of the access network. The remaining portion of the access network may include an internet protocol (IP) network. The base station may further coordinate attribute management of the air interface. For example, the base station may be a base transceiver station (Base Transceiver Station, BTS) in a global system for mobile communications (Global System of Mobile communication, GSM) or code division multiple access (Code Division Multiple Access, CDMA), or may be a NodeB (NodeB, NB) in wideband code division multiple access (Wideband Code Division Multiple Access, WCDMA), or may be an evolved NodeB (Evolutional Node B, eNB or eNodeB) in long term evolution (Long Term Evolution, LTE), a relay node or an access point, a gNodeB gNB in a future 5G network, or the like. This is not limited herein.

The terminal device may be a wireless terminal or a wired terminal. The wireless terminal may be a device that provides connectivity of voice and/or other service data for a user, a handheld device with a radio connection function, or another processing device connected to a wireless modem. A wireless terminal may communicate with one or more core networks by using a radio access network (Radio Access Network, RAN). The wireless terminal may be a mobile terminal, such as a mobile phone (also referred to as a "cellular" phone) or a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communication service (Personal Communication Service, PCS) phone, a cordless telephone set, a session initiation protocol (Session Initiation Protocol, SIP) phone, a wireless local loop (Wireless Local Loop, WLL) station, or a personal digital assistant (Personal Digital Assistant, PDA). The wireless terminal may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), user equipment (User Device or User Equipment), a sensor having a network access function, or the like. This is not limited herein.

The air interface format described above may be an air interface whose at least one of the following parameters or information (to be specific, an example of configuration information) is different. Specifically, the parameters are as follows.

Waveform parameter: also referred to as a parameter of a waveform. The waveform parameter is a parameter that can indicate or determine a waveform. By way of example, and not limitation, in this embodiment of this application, the waveform parameter may include at least one of the following parameters: a waveform parameter used in an orthogonal frequency division multiplexing (Orthogonal Frequency Division Multiplexing, OFDM) technology; a waveform parameter used in single-carrier frequency-division multiple access (Single-carrier Frequency-Division Multiple Access, SC-OFDM); a waveform parameter used in a filter orthogonal frequency division multiplexing (filter Orthogonal Frequency Division Multiplexing, filter OFDM) technology; a waveform parameter used in a universal filtered multicarrier (Universal Filtered Multi-Carrier, UFMC) technology; a waveform parameter used in a filter bank multicarrier (Filter Bank Multicarrier, FBMC) technology; and a waveform parameter used in a generalized frequency division multiplexing (Generalized Frequency Division Multiplexing, GFDM) technology.

Modulation scheme: In a communications technology, to ensure a communication effect and overcome a problem in long-distance signal transmission, a signal spectrum may be transferred, through modulation, to a high-frequency channel for transmission. This process of loading a to-be-sent signal to a high-frequency signal is referred to as modulation. By way of example, and not limitation, in this embodiment of this application, the modulation scheme may include at least one of the following schemes: amplitude shift keying (Amplitude Shift Keying, ASK) modulation; phase shift keying (Phase Shift Keying, PSK) modulation; frequency shift keying (Frequency Shift Keying, FSK) modulation; quadrature amplitude modulation (Quadrature Amplitude Modulation, QAM); minimum shift keying (Minimum Shift Keying, MSK) modulation; Gaussion filtered minimum shift keying (Gaussian Filtered Minimum Shift Keying, GMSK) modulation; and OFDM modulation.

Bandwidth configuration: In this embodiment of this application, the bandwidth configuration may indicate a used width of a frequency domain resource required by an air interface. By way of example, and not limitation, a bandwidth configuration corresponding to a broadband transmission service may be a minimum frequency domain resource width or quantity of subcarriers that is required by the air interface. A bandwidth configuration corresponding to a narrowband transmission service may be a maximum frequency domain resource width or quantity of subcarriers that is required by the air interface.

Radio frame configuration manner: subcarrier spacing (Subcarrier Spacing, SCS), symbol length, cyclic prefix (Cyclic Prefix, CP), timing (Timing, for example, duration between an uplink grant and uplink data transmission), duplex mode, length of a transmission time interval (Transmission Time Interval, TTI), length of a radio frame, and length of a radio subframe. For example, the duplex mode may be full duplex, half duplex (including an uplink-downlink configuration of half duplex), or flexible duplex. It should be noted that for some air interfaces, the duplex mode may be fixed or may change flexibly, and the transmission time interval may be fixed or may change flexibly. This is not specially limited in this embodiment of this application.

Resource multiplexing mode: By way of example, and not limitation, in this embodiment of this application, the resource multiplexing mode may include at least one of the following modes:
Frequency division multiplexing (Frequency Division Multiplexing, FDM): Total bandwidth used for channel transmission is divided into several frequency subbands (or referred to as subchannels), where each subchannel transmits one signal. Frequency division multiplexing requires that a total frequency width be greater than a sum of frequencies of the sub-channels. In addition, to avoid mutual interference between signals transmitted in the sub-channels, an isolation band needs to be set between the sub-channels. In this way, mutual interference between signals is avoided (one condition).

Time division multiplexing (Time Division Multiplexing, TDM): Different signals are transmitted by using different time segments of a same physical connection. This can also implement multichannel transmission. In time division multiplexing, time is used as a parameter for signal division. Therefore, all channels of signals cannot overlap with each other along a time axis. Time division multiplexing means that time provided for a channel to transmit information is divided into several time segments (timeslots for short) and these timeslots are allocated to signal sources.

Space division multiplexing (Space Division Multiplexing, SDM): A same band is reused in different space. In mobile communications, a basic technology that can implement space division is using an adaptive array antenna to obtain different beams in different user directions. In addition, different users may be distinguished through space division, each beam may provide a unique channel that is not interfered with by another user, different data of a same user may be distinguished through space division, or same data of a same user may be distinguished through space division, to obtain a higher gain.

Code division multiplexing (Code Division Multiplexing, CDM): a multiplexing mode in which various channels of original signals are distinguished by using different codes. By way of example, and not limitation, CDM may include at least one of the following: code division multiple access (Code Division Multiple Access, CDMA), frequency division multiple access (Frequency Division Multiple Access, FDMA), time division multiple access (Time Division Multiple Access, TDMA), and synchronous code division multiple access (Synchronous Code Division Multiple Access, SCDMA). Channel configuration manner: In this embodiment of this application, different types of data or signals may be transmitted by using different channels. Therefore, the channel configuration manner may refer to a time-frequency resource, a code domain resource, or a space domain resource (for example, a specified beam) corresponding to a channel. By way of example, and not limitation, in this embodiment of this application, a channel used in wireless communications may include at least one or a combination of a plurality of the following channels: a control channel (which, for example, may include an uplink control channel and a downlink control channel) for transmitting control information, a data channel (which, for example, may include an uplink data channel and a downlink data channel) for transmitting data, a reference channel for transmitting a reference signal, and an access channel for sending access information.

Coding scheme: Coding is a transformation performed on source symbols to improve communication effectiveness, or is a transformation performed on source symbols to reduce or eliminate source redundancy. For example, coding means finding a method based on a statistic characteristic of a source output symbol sequence, to transform the source output symbol sequence into a shortest codeword sequence, so that an average information amount loaded by elements of the shortest codeword sequence is the largest, ensuring that the original symbol sequence can be restored without distortion. By way of example, and not limitation, in this embodiment of this application, the coding scheme may include at least one of the following: polar code (Polar Code), turbo code (Turbo Code), and convolutional code (Convolution Code).

Protocol stack configuration manner: A protocol stack (Protocol Stack) is an aggregation of all layers of protocols in a network, and vividly reflects a file transmission process in the network, to be specific, a process from an upper-layer protocol to an underlying protocol and from the underlying protocol to the upper-layer protocol. By way of example, and not limitation, in this embodiment of this application, a protocol stack used in wireless communications may include at least one or a combination of a plurality of the following protocol layers: packet data convergence protocol (Packet Data Convergence Protocol, PDCP) layer, radio link control (Radio Link Control, RLC) layer, media access control (Media Access Control, MAC) layer, physical (Physical) layer, and radio resource control (Radio Resource Control, RRC) layer. There may be a plurality of protocol entities at each protocol layer.

Multiple access mode: Different from multiplexing, a multiple access technology does not need to aggregate various pieces of information but separately modulates them to channels, and separately obtains, from the channels, required information that is generated after modulation. By way of example, and not limitation, in this embodiment of this application, a multiple access mode used in wireless communications may include at least one of the following: FDMA, TDMA, CDMA, SCMA, non-orthogonal multiple access (Non Orthogonal Multiple Access, NOMA), and multi-user shared access (Multi-User Shared Access, MUSA).

It should be noted that the foregoing communications system may be an LTE communications system, or may be another future communications system, for example, a 5G communications system. This is not limited herein.

In an example of a future 5G communications system, currently the future 5G communications system supports a grant-free transmission manner of uplink data. To be specific, a terminal device may directly send uplink data to a network device on a preconfigured resource without a UL grant sent by the network device. The resource herein may be, for example, a time-frequency resource, a frequency domain resource, or a time domain resource.

The following briefly describes a grant-free transmission procedure. Specifically, the network device may preconfigure one resource for each group of terminal devices. A terminal device in the group may repeatedly send, for a preconfigured quantity of times and in a plurality of time units, same uplink data and a reference signal (Reference Signal, RS) to the network device on the preconfigured resource without an UL grant. The RS is used to assist the network device in decoding the uplink data. The terminal device may send the uplink data and the RS to the network device once in one time unit. The plurality of time units may be a plurality of time units that are continuous or discontinuous in time, and may be specifically determined based on a system configuration. In a specific implementation, the time unit may be any one of an orthogonal frequency division multiplexing (Orthogonal Frequency Division Multiplexing, OFDM) symbol, a timeslot (Slot), a mini-slot, a subframe, a frame, and the like.

If the network device correctly receives the uplink data sent by the terminal device, the network device may send an acknowledgement (Acknowledge, ACK) signal to the terminal device, to indicate to the terminal device that the network device correctly receives the uplink data. If the ACK is sent to the terminal device before a quantity of times of sending the uplink data and the RS by the terminal device to the network device reaches the preconfigured quantity of times, after receiving the ACK, the terminal device stops sending the uplink data on the preconfigured resource.

If the network device can detect the RS and the data that are sent by the terminal device, or can detect the RS sent by the terminal device but fails to correctly receive the uplink data sent by the terminal device (in other words, fails to decode the received data or receive the data), the network device may send a UL grant to the terminal device, to instruct the terminal device to resend the uplink data on a resource indicated by the UL grant. If the UL grant is sent to the terminal device before the quantity of times of sending the uplink data and the RS by the terminal device to the network device reaches the preconfigured quantity of times, after receiving the UL grant, the terminal device stops sending the uplink data on the preconfigured resource.

In a process of repeatedly sending the uplink data and the RS to the network device on the preconfigured resource for the preconfigured quantity of times, if the terminal device fails to receive the ACK or the UL grant sent by the network device, after the quantity of times of sending the uplink data and the RS reaches the preconfigured quantity of times, the terminal device stops sending the uplink data on the preconfigured resource.

Currently, when the terminal device sends the uplink data in the grant-free transmission manner, RSs used by the terminal devices in the foregoing group are orthogonal to each other. In this way, even if the plurality of terminal devices in the group send the RSs on the preconfigured resource at the same time, no interference is generated between the RSs, and the network device can correctly receive the RSs sent by the terminal devices in the group. Therefore, the network device may determine an ID of the terminal device by using the RS sent by the terminal device and the resource used when the terminal device sends the RS. For example, the network device may determine, by using a resource and a correspondence between the resource and a terminal device group, a terminal device group corresponding to the resource, and may further determine, based on the RS and a correspondence between the RS and the ID of the terminal device, which ID of the terminal device in the terminal device group corresponds to the RS. Therefore, in this scenario, when the plurality of terminal devices in the group send the RSs and the uplink data on the preconfigured resource at the same time, and the network device cannot correctly receive the uplink data sent by all or some terminal devices, the network device may still determine, based on the RSs sent by the terminal devices, a terminal device that has to-be-sent uplink data. In this way, the network device may send the UL grant to the terminal device, to instruct the terminal device to resend the uplink data on a resource scheduled by the network device for the terminal device.

Currently, the grant-free transmission procedure has been adopted in a 5G standard, but a manner in which a network device sends a UL grant is not limited. Therefore, when the terminal device transmits uplink data in a grant-free transmission manner, how the network device sends the UL grant to the terminal device is an urgent problem to be resolved.

An embodiment of this application provides a communication method, to resolve the foregoing technical problem. The following uses the communications system shown in FIG. 1 as an example to describe the technical solutions in the embodiments of this application in detail by using some embodiments. The following several embodiments may be combined with each other, and a same or similar concept or process may not be described again in some embodiments.

FIG. 2 is a schematic flowchart of a communication method according to an embodiment of this application. This embodiment describes a process in which when a terminal device transmits uplink data in a grant-free transmission manner, a network device sends, to the terminal device, first indication information that is used to indicate a resource for sending the data by the terminal device. As shown in FIG. 2, the method may include the following steps.

S101: The network device detects, in a first time unit, an RS and/or data that are/is sent by the terminal device to the network device in a second time unit.

S102: The network device sends first indication information in a third time unit after the first time unit, where the first indication information is used to indicate a resource for sending the data by the terminal device.

Specifically, in this embodiment, the terminal device may send the data and the RS to the network device for a plurality of times. To be specific, in the grant-free transmission manner, the terminal device may repeatedly send the data and the RS to the network device on a preconfigured resource for a preconfigured quantity of times and in a plurality of time units. Therefore, the network device may detect, in each time unit, the data and the RS that are sent by the terminal device. It should be noted that, there may be a time difference between the time unit in which the terminal device sends the data and the RS and the time unit in which the network device detects the data and/or the RS sent by the terminal device. Therefore, the network device may detect the data and/or the RS and the terminal device may send the data and the RS in a same time unit, in two different time units that overlap in a time area, or in two different time units that do not overlap in a time area.

In this embodiment, after the network device detects, in the first time unit, the RS and/or the data that are/is sent by the terminal device in the second time unit, if the network device still fails to correctly receive, before the third time unit, the data sent by the terminal device, the network device may send the first indication information to the terminal device in the third time unit, to indicate, to the terminal device, the resource that is specially scheduled by the network device for the terminal device and that is used to send the data. In other words, after detecting the RS and/or the data that are/is sent by the terminal device, the network device may have a certain period of time to attempt to correctly receive the data from the terminal device through a plurality of transmissions by the terminal device. If the network device still fails to correctly receive the data sent by the terminal device within the period of time, it indicates that there is a conflict between the data sent by the terminal device and data sent by another terminal device in a group, or a channel condition is relatively poor. Even if the terminal device resends the data, there is a relatively high probability that the network device fails to correctly receive the data. In this case, the network device may send the first indication information to the terminal device, to indicate the resource that is specially scheduled by the network device for the terminal device and that is used to send the data. This manner ensures accuracy of sending the first indication information by the network device.

The first indication information may carry information about the scheduled resource and an identifier of the data. For example, the identifier of the data may be an identifier of a hybrid automatic repeat request (Hybrid Automatic Repeat Request, HARQ) process used by the terminal device to send the data. A person skilled in the art may understand that, a term of the first indication information or another term in UL grant may still be used in a 5G mobile communications system. Therefore, a name of the first indication information in communications systems is not limited in this embodiment of this application.

The first time unit, the second time unit, and the third time unit are one of an OFDM symbol, a timeslot, a mini-slot, a subframe, and a frame. It should be noted that the first time unit, the second time unit, and the third time unit may be time units of a same type (for example, all of them are timeslots) or of different types. For example, the first time unit may be a mini-slot, the second time unit may be a timeslot, and the third time unit may be an OFDM symbol. In addition, the first time unit, the second time unit, and the third time unit may be different types of time units at different moments. Using the first time unit as an example, the first time unit may be a timeslot at some moments, or may be a mini-slot or the like at other moments. The first time unit, the second time unit, and the third time unit may be specifically determined based on a system configuration. In addition, for a relationship between the first time unit and the second time unit, refer to the foregoing relationship between a time unit in which the terminal device sends the data and the RS and the time unit in which the network device receives the data and/or the RS sent by the terminal device. Details are not described herein again. The following mainly describes a relationship between the first time unit and the third time unit.

The network device may not be capable of detecting the data and/or the RS sent by the terminal device each time. Therefore, a duration may be preset in a procedure of transmitting the uplink data in the grant-free transmission manner. The third time unit is determined based on the preset duration and the first time unit. In a specific implementation, the preset duration may be, for example, a duration in which the terminal device can send the data and the RS to the network device for L times. L is a positive integer greater than or equal to 1. If the terminal device sends the data and the RS to the network device for L times in L consecutive time units, the preset duration may be a duration corresponding to the L time units. If the terminal device sends the data and the RS to the network device for L times in L inconsecutive time units, the preset duration may be a total duration from a first time unit to an L^{th} time unit used to send the data and the RS. Avalue of L may be specifically determined based on a system configuration. For example, L may be less than or equal to the preconfigured quantity of times.

In this way, the terminal device may send the data and the RS to the network device for at least once within the preset duration. Correspondingly, the network device may detect, for at least once, the data and the RS that are sent by the terminal device. If the network device fails to correctly receive, within the preset duration, the data sent by the terminal device, it indicates that there is a conflict between the data sent by the terminal device and data sent by another terminal device in a group, or a channel condition is relatively poor. Even if the terminal device resends the data, there is a relatively high probability that the network device fails to correctly receive the data. In this case, the network device may send the first indication information to the terminal device, to indicate the resource that is specially scheduled by the network device for the terminal device and that is used to send the data. This manner ensures accuracy of sending the first indication information by the network device.

In addition, in this implementation, even if the preset duration starts from a time unit in which the terminal device sends the RS and a time to the network device for a first time, a time point at which the network device sends the first indication information to the terminal device for a first time may also be after a time point at which the terminal device sends the data and the RS to the network device for an L^{th} time. Therefore, in this embodiment, the terminal device may detect the first indication information sent by the network device after sending the data and the RS to the network device for the L^{th} time, instead of the first time. This manner can reduce a quantity of times of detecting the first indication information by the terminal device, and further lower power consumption of the terminal device. Optionally, the time unit in which the terminal device detects the first indication information may be a time unit in which the terminal device sends the data and the RS for the L^{th} time, may be a time unit after the time unit in which the terminal device sends the data and the RS for the L^{th} time, or the like.

Therefore, for example, the relationship between the first time unit and the third time unit may include the following several cases based on the preset duration:
Case 1: The RS sent by the terminal device each time carries first information. The first information is used to indicate that the RS is an RS sent by the terminal device to the network device for an Nth time, and N is a positive integer greater than or equal to 1. In other words, after the network device detects, in the first time unit for a first time, the RS and/or the data that are/is sent by the terminal device to the network device in the second time unit, the network device may learn, based on the first information carried in the RS, a current time for which the terminal device sends the data and the RS to the network device. Therefore, in this scenario, a start point of the preset duration is the time unit in which the terminal device sends the data and the RS to the network device for the first time (or the time unit in which the network device detects, for the first time, the data and the RS sent by the terminal device), and an end point of the preset duration is the time unit in which the terminal device sends the data and the RS to the network device for the L^{th} time (or a time unit in which the network device detects, for an L^{th} time, the data and the RS sent by the terminal device).

If the second time unit is less than the time unit in which the terminal device sends the reference signal to the network device for the L^{th} time, the third time unit is the time unit in which the terminal device sends the reference signal to the network device for the L^{th} time, or the third time unit is an X^{th} time unit after the time unit in which the terminal device sends the reference signal to the network device for the L^{th} time. If the second time unit is greater than or equal to the time unit in which the terminal device sends the reference signal to the network device for the L^{th} time, the third time unit is an X^{th} time unit after the first time unit, and both L and X are positive integers greater than or equal to 1. X may be a positive integer greater than or equal to 1. A value of X may be specifically determined based on a system configuration or a latency of receiving and processing data by the network device.

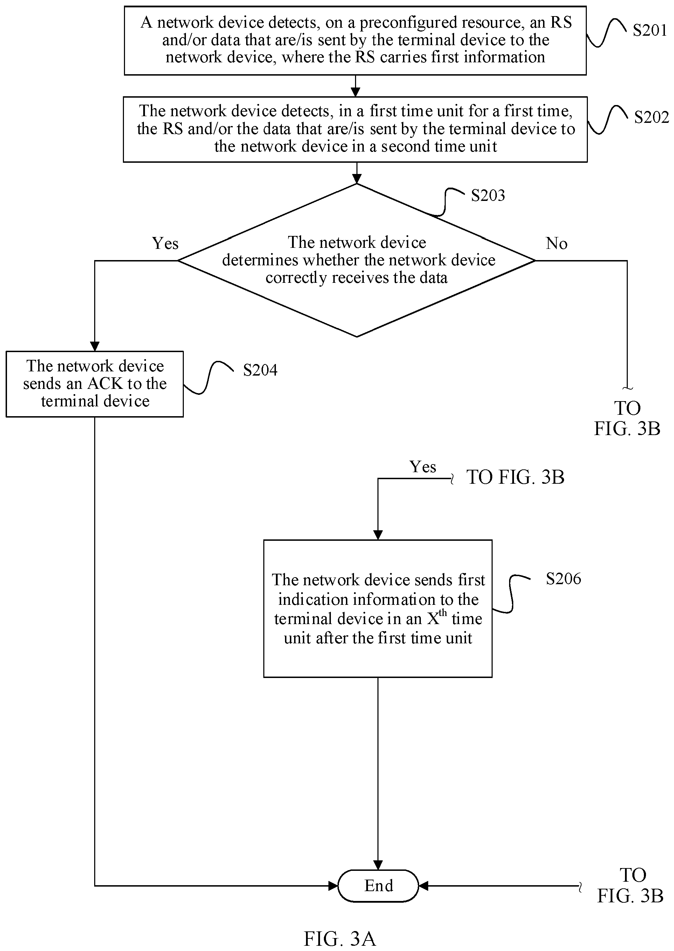

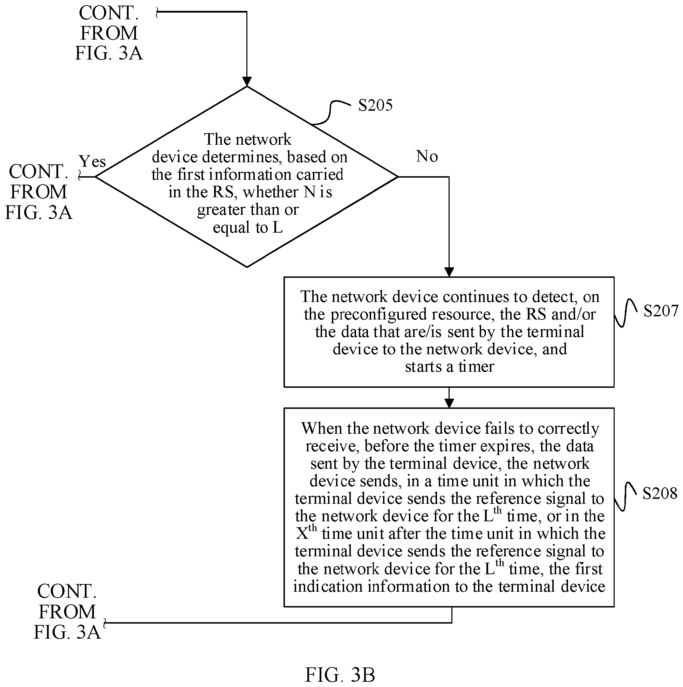

The following describes this embodiment by using a specific example. FIG. 3 is a schematic flowchart of another communication method according to an embodiment of this application. As shown in FIG. 3, the method may include the following steps. S201: The network device detects, on the preconfigured resource, the RS and/or the data that are/is sent by the terminal device to the network device, where the RS carries first information.

Specifically, the network device detects, on the preconfigured resource and in a time unit in which each terminal device may send data and an RS, the RS and the data that are sent by the terminal device to the network device.

S202: The network device detects, in the first time unit for the first time, the RS and/or the data that are/is sent by the terminal device to the network device in the second time unit.

It should be noted that RSs sent by terminal devices in a same group on the preconfigured resource are orthogonal to each other, to avoid interference. Therefore, when the network device can detect the data sent by the terminal device, the network device usually also detects the RS sent by the terminal device.

In addition, when the network device detects, in the first time unit for the first time, the RS and/or the data that are/is sent by the terminal device in the second time unit, the network device may determine an identifier of the terminal device and an identifier of an HARQ process used by the terminal device to transmit the data.

S203. The network device determines whether the network device correctly receives the data. If yes, perform S204. If not, perform S205.

Optionally, if the network device detects the RS sent by the terminal device, but fails to detect the data sent by the terminal device, the network device may determine that the network device fails to correctly receive the data sent by the terminal device. If the network device detects, for the first time, the data sent by the terminal device, the network device may attempt to decode the data. If the network device successfully decodes the data, the network device may determine that the network device correctly receives the data. If the network device fails to decode the data, the network device may determine that the network device fails to correctly receive the data sent by the terminal device.

S204: The network device sends an ACK to the terminal device.

The network device may indicate, to the terminal device by using the ACK, that the network device correctly receives the data. When the ACK and the first indication information are separately sent, to be specific, the ACK is sent on a channel that is different from a channel for sending the first indication information, or the ACK and the first indication information are sent on different physical resources, the terminal device needs to detect the ACK after the terminal device sends the data and the RS to the network device for a first time. However, the terminal device may detect, after sending the data and the RS to the network device for an L^{th} time, the first indication information sent by the network device. This manner can reduce a quantity of times of detecting the first indication information by the terminal device, and further lower power consumption of the terminal device.

Optionally, in some embodiments, if the first indication information is also used to indicate that the network device correctly receives the data, in step S204, the network device may send, to the terminal device, the first indication information used to indicate that the network device correctly receives the data.

In a specific implementation, the first indication information may include a first field and a second field. When the first field indicates an identifier (for example, the identifier of the HARQ process) of the data sent by the terminal device, and the second field does not indicate any resource (for example, the second field may be an all-zeros field, an all-ones field, or a preset field defined in a standard, and does not indicate any resource), the first indication information is used to indicate that the network device correctly receives the data. When the first field indicates the identifier of the data, and the second field indicates a resource, the first indication information is used to instruct the terminal device to send the data on the resource. Correspondingly, after receiving the first indication information, the terminal device may determine, based on the first field and the second field in the first indication information, whether the first indication information is currently used to indicate that the network device correctly receives the data, or indicate the resource for sending the data by the terminal device. Alternatively, the first indication information may include the first field. When the first field indicates the identifier of the data sent by the terminal device, the first indication information is used to indicate the resource for sending the data by the terminal device. When the first field is a preset value or indicates an identifier of data sent by another terminal device (for example, the first field is a preset field defined in a standard or is an identifier of an HARQ process of the another terminal device), the first indication information is used to indicate that the network device correctly receives the data. Correspondingly, after receiving the first indication information, the terminal device may determine, based on the first field in the first indication information, whether the first indication information is currently used to indicate that the network device correctly receives the data or indicate the resource for sending the data by the terminal device.

Alternatively, the first indication information may include the first field. When the first field indicates that the first indication information is used to indicate the resource for sending the data by the terminal device, or indicates that the first indication information is used to indicate correctly receiving the data by the network device. For example, the first field includes one bit. When the first field is 1, it indicates that the first indication information is used to indicate the resource for sending the data by the terminal device. When the first field is 0, it indicates that the first indication information is used to indicate correctly receiving the data by the network device. Alternatively, when the first field is 0, it indicates that the first indication information is used to indicate the resource for sending the data by the terminal device. Alternatively, when the first field is 1, it indicates that the first indication information is used to indicate correctly receiving the data by the network device.

Alternatively, the first indication information may include the first field. When the first field indicates a modulation and coding scheme (Modulation and Coding Scheme, MCS) and/or a redundancy version (redundancy version, RV) of the data sent by the terminal device, the first indication information is used to indicate the resource for sending the data by the terminal device. When the first field is a preset value (for example, a preset field or a reserved field defined in a standard), the first indication information is used to indicate that the network device correctly receives the data.

In this implementation, the terminal device needs to detect the first indication information after sending the data and the RS to the network device for the first time. The first indication information may be used to indicate the resource for sending the data by the terminal device, or indicate that the network device correctly receives the data. Therefore, the terminal device needs to detect only one, but not two pieces of indication information. This can further lower power consumption of the terminal device.

It should be noted that, in a grant-free transmission procedure, the network device sends, to the terminal device, an indication of the resource for sending the data by the terminal device. In addition, this embodiment of this application describes that the first indication information may be further used to indicate that the network device correctly receives the data. However, a person skilled in the art may understand that the network device may use the first indication information provided in the implementation of this embodiment in any scenario to send indication information to the terminal device to indicate the resource of sending the data by the terminal device, or indicate that the network device correctly receives the data. Therefore, the terminal device needs to detect only one, but not two pieces of indication information. This can further lower power consumption of the terminal device. In other words, the first indication information that may indicate that the network device correctly receives the data or indicate the resource for sending the data by the terminal device may be in a separate embodiment, and does not necessarily depend on the foregoing embodiment.

S205: The network device determines, based on the first information carried in the RS, whether N is greater than or equal to L. If yes, perform S206. If not, perform S207.

Specifically, if the network device fails to correctly receive the data, the network device may determine, based on the first information carried in the RS currently sent by the terminal device, whether N is greater than or equal to L, to determine whether a preset duration is exceeded by determining whether N is greater than or equal to L. N indicates that the terminal device sends the RS and/or the data to the network device for an N^{th} time.

S206: The network device sends first indication information to the terminal device in an X^{th} time unit after the first time unit.

S207: The network device continues to detect, on the preconfigured resource, the RS and/or the data that are/is sent by the terminal device to the network device, and starts a timer.

A duration of the timer is the preset duration minus a duration from a time unit in which the terminal device sends the data and the RS for the first time to the second time unit. If the network device re-detects, before the timer expires, data sent by the terminal device, the network device may perform soft combination on the data and the previously received data, and attempt to decode the data again.

S208: When the network device fails to correctly receive, before the timer expires, the data sent by the terminal device, the network device sends, in a time unit in which the terminal device sends the reference signal to the network device for the L^{th} time, or in the X^{th} time unit after the time unit in which the terminal device sends the reference signal to the network device for the L^{th} time, the first indication information to the terminal device.

As described in the foregoing embodiment, when sending the uplink data in the grant-free transmission manner, the terminal device may send the data and the RS to the network device based on the preconfigured quantity of times. Therefore, after a quantity of times of sending the uplink data and the RS by the terminal device reaches the preconfigured quantity of times, the network device may not detect, for once, the data and/or the RS sent by the terminal device. Therefore, the terminal device may retransmit the data and the RS when failing to detect the first indication information before a fourth time unit, to prevent the terminal device from endlessly detecting the first indication information. The fourth time unit may be greater than the time unit in which the terminal device sends the data and the RS to the network device for the L^{th} time.

The following uses a specific example to describe an action on a terminal device side.

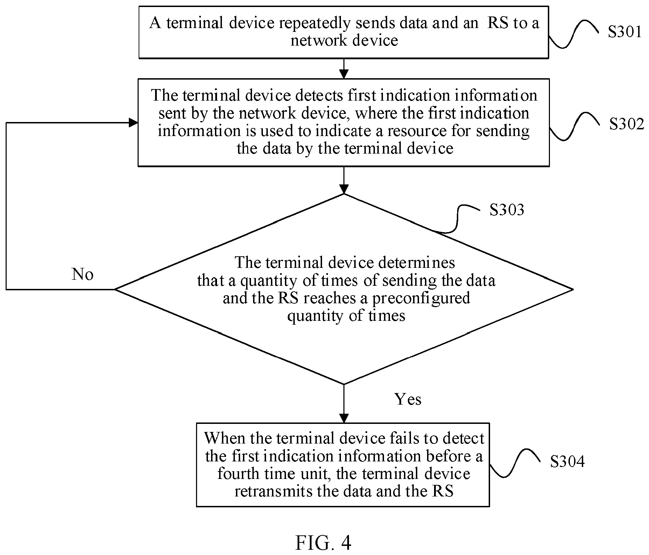

FIG. 4 is a schematic flowchart of still another communication method according to an embodiment of this application. As shown in FIG. 4, the method may include the following steps.

S301: The terminal device repeatedly sends the data and the RS to the network device. In a process in which the terminal device repeatedly sends the data and the RS to the network device, transmit powers used by the terminal device each time may be the same or different. For example, the transmit power used by the terminal device each time may be greater than or equal to a transmit power used by the terminal device previous time. For example, the transmit power used by the terminal device each time may be a sum of a transmit power used by the terminal device previous time and a preset power threshold, or may be a product of the transmit power used by the terminal device previous time and a preset power multiple. When the power calculated in the foregoing manner is greater than a maximum transmit power of the terminal device, the terminal device may use the maximum transmit power of the terminal device as a transmit power used in current sending.

The transmit power may be a power for sending an RS. This manner can increase the transmit power of the RS, increase a probability of successfully detecting the RS by the network device, and further improve efficiency of sending the first indication information.

The transmit power may alternatively be a total power for sending the RS and the data. This manner can increase the transmit power of the RS, increase the power for sending data, and further increase a probability of correctly receiving the data by the network device.

It should be noted that, using a grant-free transmission procedure as an example, this embodiment of this application describes the power used by the terminal device to send the data and the RS to the network device. However, a person skilled in the art may understand that the terminal device may use the manner provided in the steps of this embodiment in any scenario in which the terminal device needs to repeatedly send the data and the RS to the network device, to increase the probability of detecting the RS by the network device, or the probability of detecting the RS and the data by the network device. In other words, the power used by the terminal device to send the data and the RS to the network device may be in a separate embodiment, and does not necessarily depend on the foregoing embodiment.

S302: The terminal device detects the first indication information sent by the network device, where the first indication information is used to indicate a resource for sending the data by the terminal device.

If an ACK and the first indication information are separately sent, the terminal device may start to detect, after sending the data and the RS to the network device for an L^{th} time, the first indication information sent by the network device. If the first indication information may be used to indicate the resource for sending the data by the terminal device, or indicate that the network device correctly receives the data, the terminal device starts to detect, after sending the data and the RS to the network device for a first time, the first indication information sent by the network device.

S303: The terminal device determines that the quantity of times of sending the data and the RS reaches the preconfigured quantity of times. If yes, perform S304; or if no, perform S302.

To be specific, when the terminal device determines that the quantity of times of sending the data and the RS is a last time, the terminal device may retransmit the data and the RS when failing to detect the first indication information before a fourth time unit. If the terminal device determines that the quantity of times of sending the data and the RS is not the last time, the terminal device may continue to detect the first indication information sent by the network device.

S304: When the terminal device fails to detect the first indication information before the fourth time unit, the terminal device retransmits the data and the RS.

The fourth time unit may be one of an OFDM symbol, a timeslot, a mini-slot, a subframe, and a frame. It should be noted that the fourth time unit may be different types of time units at different moments. For example, the fourth time unit may be a timeslot at some moments, or may be a mini-slot or the like at other moments. This may be specifically determined based on a system configuration. In addition, the data retransmitted by the terminal device and the previously transmitted data have same information content, but different MCSs or RVs. For example, changing the MCS or RV of the data retransmitted by the terminal device may increase the probability of correctly receiving the data by the network device. Specifically, a modulation scheme used by the terminal device to repeatedly send the data to the network device may be 16QAM, and a modulation scheme used by the terminal device to retransmit the data is BPSK or QPSK. This reduces a demodulation threshold of the network device and increases the probability of correctly receiving data by the network device. Optionally, in some embodiments, when the terminal device retransmits the data and the RS, a maximum quantity of times of retransmitting the data and the RS may be greater than or equal to the quantity of times of repeatedly sending the data and the RS by the terminal device to the network device; and/or a transmit power used when the terminal device performs retransmission may be greater than or equal to a transmit power used when the terminal device repeatedly performs sending. For example, the transmit power used when the terminal device performs retransmission may be a sum of the transmit power used when the terminal device repeatedly performs sending in S301 and a preset power threshold, may be a product of the transmit power used when the terminal device repeatedly performs sending in S301 and a preset power multiple, or the like. When the power calculated in the foregoing manner is greater than the maximum transmit power of the terminal device, the terminal device may use the maximum transmit power of the terminal device as a transmit power used in current retransmission.

Increasing the quantity of retransmission times can increase the probability of detecting the RS by the network device, and can also increase the probability of correctly receiving the data. Optionally, the transmit power may be the power for sending the RS. Increasing the power for sending the RS can increase the transmit power of the RS, increase the probability of successfully detecting the RS by the network device, and further improve efficiency of sending the first indication information. Optionally, the transmit power may alternatively be the total power for sending the RS and the data. Increasing the total power for sending the RS and the data can increase the transmit power of the RS, increase the power for sending data, and further increase the probability of correctly receiving the data by the network device.

It should be noted that, using the grant-free transmission procedure as an example, this embodiment of this application describes the quantity of times of retransmitting the data and the RS by the terminal device to the network device, and the used power. However, a person skilled in the art may understand that the terminal device may use the manner provided in the steps of this embodiment in any scenario in which the terminal device needs to retransmit the data and the RS to the network device, to increase the probability of detecting the RS by the network device, or the probability of detecting the RS and the data by the network device. In other words, the quantity of times of retransmitting the data and the RS by the terminal device to the network device, and the used power may be in a separate embodiment, and does not necessarily depend on the foregoing embodiment.

In addition, it should be emphasized that a resource used by the terminal device during retransmission may be different from the currently used resource. Therefore, the RS sent during retransmission may be the same as or different from the currently sent RS, and may be specifically determined depending on the resource used during retransmission. This is not distinguished in this embodiment of this application.

In this implementation, when the network device detects the data and/or the RS for a first time, the data and/or the RS are/is sent by the terminal device for the last time. In other words, the first time unit is a last time unit in which the network device can detect the RS and/or the data that are/is sent by the terminal device. Based on the foregoing procedure, the network device may send the first indication information to the terminal device in the X^{th} time unit after the first time unit. In this scenario, the fourth time unit may be, for example, the X^{th} time unit after the time unit in which the terminal device sends the RS to the network device for the last time.

Optionally, in some embodiments, if the network device can quickly process data, the network device may completely process the data in the first time unit, and send the first indication information to the terminal device in the first time unit. In this implementation, the fourth time unit may be, for example, the time unit in which the terminal device sends the RS to the network device for the last time.

Case 2: The RS sent by the terminal device each time carries second information. The second information is used to indicate whether the RS is an RS sent by the terminal device to the network device for a first time.

In other words, after the network device detects, in the first time unit, the RS and/or the data that are/is sent by the terminal device to the network device in the second time unit, the network device may learn, based on the second information carried in the RS, whether the terminal device sends the data and the RS to the network device for the first time.

Therefore, in this scenario, a start point of the preset duration is the time unit in which the terminal device sends the data and the RS to the network device for the first time (or the time unit in which the network device detects, for the first time, the data and the RS sent by the terminal device), and an end point of the preset duration is the time unit in which the terminal device sends the data and the RS to the network device for the L^{th} time (or a time unit in which the network device detects, for the L^{th} time, the data and the RS sent by the terminal device). In this implementation, the third time unit may be the time unit in which the terminal device sends the RS to the network device for the L^{th} time, or the X^{th} time unit after the time unit in which the terminal device sends the RS to the network device for the L^{th} time.

When the network device determines, based on the second information carried in the RS, that the RS is not the RS sent by the terminal device to the network device for the first time, the start point of the preset duration may be the second time unit (or the first time unit), and the end point of the preset duration is an (L-1)^{th} time unit after the second time unit in which the terminal device can send the data and the RS to the network device (or an (L-1)^{th} time unit after the first time unit in which the network device can detect the data and the RS sent by the terminal device). In this implementation, the third time unit may be an M^{th} time unit after the first time unit, M is a positive integer greater than or equal to 1, and a value of M is a difference between L and 1.

Alternatively, when the network device determines, based on the second information carried in the RS, that the RS is not the RS sent by the terminal device to the network device for the first time, the start point of the preset duration may be a first time unit after the second time unit in which the terminal device can send the data and the RS to the network device (or a first time unit after the first time unit in which the network device can detect the data and the RS sent by the terminal device), and the end point of the preset duration is an L^{th} time unit after the second time unit in which the terminal device can send the data and the RS to the network device (or an L^{th} time unit after the first time unit in which the network device can detect the data and the RS sent by the terminal device). In the implementation, the third time unit may be an M^{th} time unit after the first time unit, and a value of M is the same as a value of L.

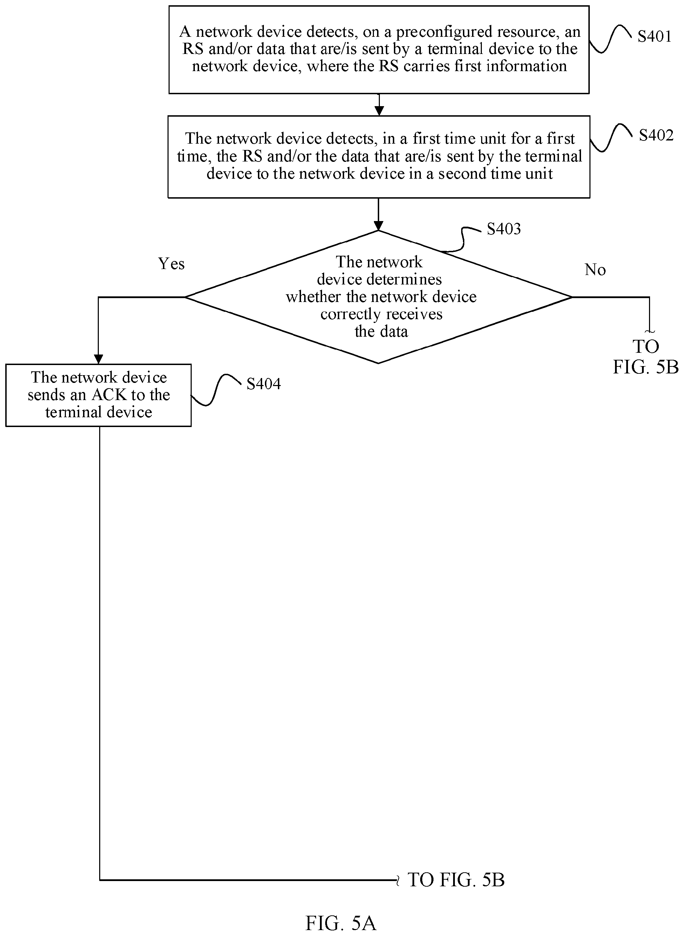

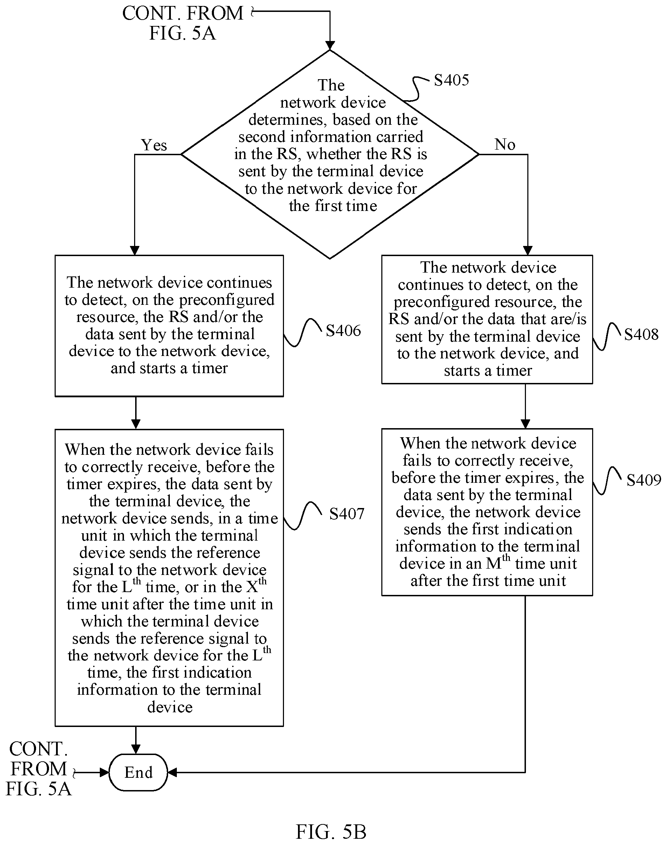

The following describes this embodiment by using a specific example. FIG. 5 is a schematic flowchart of still another communication method according to an embodiment of this application. As shown in FIG. 5, the method may include the following steps.

S401: The network device detects, on the preconfigured resource, the RS and/or the data that are/is sent by the terminal device to the network device, where the RS carries the second information.

S402: The network device detects, in the first time unit for the first time, the RS and/or the data that are/is sent by the terminal device to the network device in the second time unit.

S403: The network device determines whether the network device correctly receives the data. If yes, perform S404. If not, perform S405.

S404: The network device sends an ACK to the terminal device.

S405: The network device determines, based on the second information carried in the RS, whether the RS is sent by the terminal device to the network device for the first time. If yes, perform S406. If not, perform S408.

S406: The network device continues to detect, on the preconfigured resource, the RS and/or the data that are/is sent by the terminal device to the network device, and starts a timer.

A duration of the timer is the preset duration minus a duration from a time unit in which the terminal device sends the data and the RS for the first time to the second time unit. For example, in this step, the second time unit is the time unit in which the terminal device sends the data and the RS for the first time. Therefore, the duration from the time unit in which the data and the RS are sent for the first time to the second time unit is equal to zero.

If the network device re-detects, before the timer expires, data sent by the terminal device, the network device may perform soft combination on the data and the previously received data, and attempt to decode the data again.

S407: When the network device fails to correctly receive, before the timer expires, the data sent by the terminal device, the network device sends, in a time unit in which the terminal device sends the reference signal to the network device for the L^{th} time, or in the X^{th} time unit after the time unit in which the terminal device sends the reference signal to the network device for the L^{th} time, the first indication information to the terminal device.

S408: The network device continues to detect, on the preconfigured resource, the RS and/or the data that are/is sent by the terminal device to the network device, and starts a timer.

A duration of the timer is the preset duration minus a duration of the second time unit. Alternatively, the duration of the timer is the preset duration.

If the network device re-detects, before the timer expires, data sent by the terminal device, the network device may perform soft combination on the data and the previously received data, and attempt to decode the data again.

S409: When the network device fails to correctly receive, before the timer expires, the data sent by the terminal device, the network device sends the first indication information to the terminal device in the M^{th} time unit after the first time unit.

In this implementation, when the network device detects the data and/or the RS for a first time, the data and/or the RS are/is sent by the terminal device for a last time. In other words, the first time unit is a last time unit in which the network device can detect the RS and/or the data that are/is sent by the terminal device. Based on the foregoing procedure, the network device may send the first indication information to the terminal device in the M^{th} time unit after the first time unit. In this scenario, the fourth time unit may be, for example, the M^{th} time unit after the time unit in which the terminal device sends the RS to the network device for the last time.

Case 3: The RS sent by the terminal device each time does not carry information about a quantity of sending times.

To be specific, after the network device detects, in the first time unit, the RS and/or the data that are/is sent by the terminal device to the network device in the second time unit, the network device cannot learn a time for which the terminal device sends the RS and/or the data to the network device.

Therefore, in this scenario, a start point of the preset duration may be the second time unit (or the first time unit), and an end point of the preset duration is an (L-1)^{th} time unit after the second time unit in which the terminal device can send the data and the RS to the network device (or an (L-1)^{th} time unit after the first time unit in which the network device can detect the data and the RS sent by the terminal device). In this implementation, the third time unit may be an M^{th} time unit after the first time unit, M is a positive integer greater than or equal to 1, and a value of M is a difference between L and 1.

Alternatively, the start point of the preset duration may be a first time unit after the second time unit in which the terminal device can send the data and the RS to the network device (or a first time unit after the first time unit in which the network device can detect the data and the RS sent by the terminal device), and the end point of the preset duration is an L^{th} time unit after the second time unit in which the terminal device can send the data and the RS to the network device (or an L^{th} time unit after the first time unit in which the network device can detect the data and the RS sent by the terminal device). In the implementation, the third time unit may be an M^{th} time unit after the first time unit, M is a positive integer greater than or equal to 1, and a value of M is the same as a value of L.

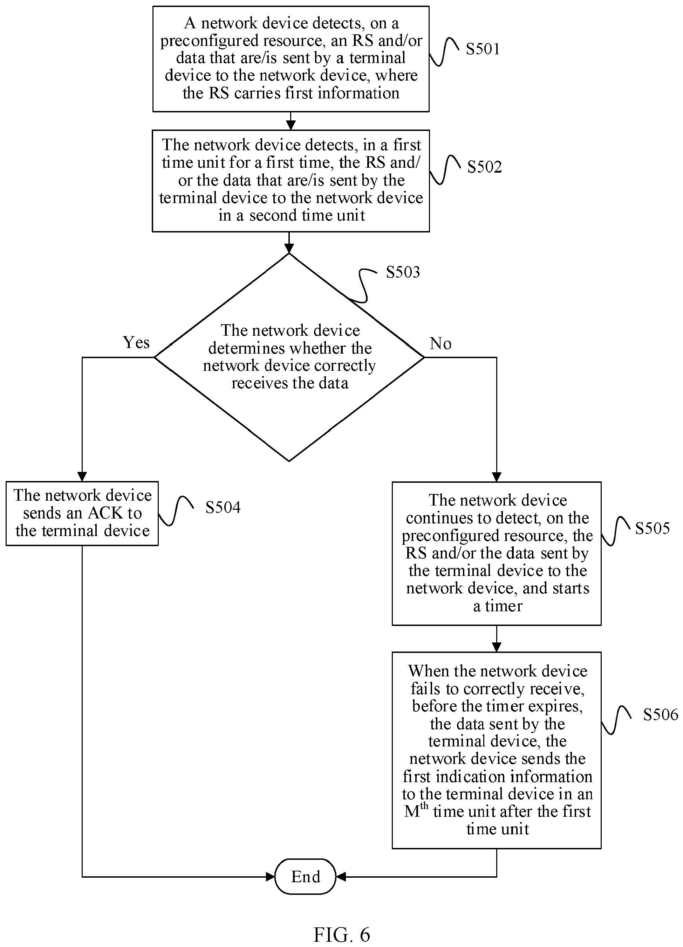

The following describes this embodiment by using a specific example. FIG. 6 is a schematic flowchart of still another communication method according to an embodiment of this application. As shown in FIG. 6, the method may include the following steps.

S501: The network device detects, on the preconfigured resource, the RS and/or the data that are/is sent by the terminal device to the network device.

S502: The network device detects, in the first time unit for the first time, the RS and/or the data that are/is sent by the terminal device to the network device in the second time unit.

S503: The network device determines whether the network device correctly receives the data. If yes, perform S504. If not, perform S505.

S504: The network device sends an ACK to the terminal device.

S505: The network device continues to detect, on the preconfigured resource, the RS and/or the data that are/is sent by the terminal device to the network device, and starts a timer.

A duration of the timer is the preset duration minus a duration of the second time unit.

Alternatively, the duration of the timer is the preset duration.

If the network device re-detects, before the timer expires, data sent by the terminal device, the network device may perform soft combination on the data and the previously received data, and attempt to decode the data again.

S506: When the network device fails to correctly receive, before the timer expires, the data sent by the terminal device, the network device sends the first indication information to the terminal device in the M^{th} time unit after the first time unit.

When the duration of the timer is the preset duration minus the duration of the second time unit, the value of M is L-1. When the duration of the timer is the preset duration, the value of M is equal to the value of L.

In this implementation, when the network device detects the data and/or the RS for a first time, the data and/or the RS are/is sent by the terminal device for a last time. In other words, the first time unit is a last time unit in which the network device can detect the RS and/or the data that are/is sent by the terminal device. Based on the foregoing procedure, the network device may send the first indication information to the terminal device in the M^{th} time unit after the first time unit. In this scenario, the fourth time unit may be, for example, the M^{th} time unit after the time unit in which the terminal device sends the RS to the network device for the last time.

It should be noted that, there is a time difference between the time unit used by the terminal device and the time unit used by the network device described in the foregoing embodiment in an actual time, but each time unit used by the terminal device corresponds to a time unit of the network device. Therefore, in this embodiment of this application, the time unit on a terminal device side is used in some cases, and the time unit on a network device side is used in some cases. However, a person skilled in the art may understand that the two time units may be interchangeable with corresponding time units. The interchanged time units may still be used to implement this embodiment of this application. Details are not described herein again.

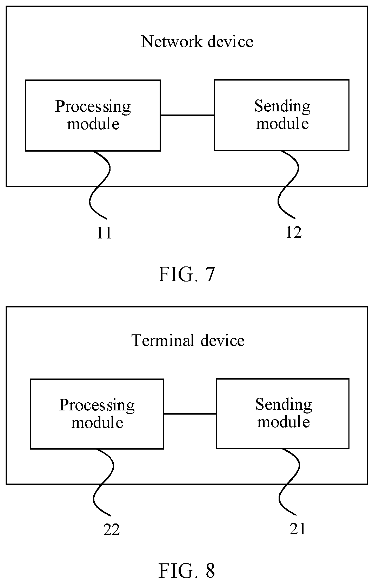

According to the communication method provided in this embodiment of this application, the terminal device sends the data to the network device in a grant-free transmission manner. After detecting the RS and/or the data that are/is sent by the terminal device, the network device may have a certain period of time to attempt to correctly receive the data from the terminal device through a plurality of transmissions by the terminal device. If the network device still fails to correctly receive the data sent by the terminal device within the period of time, the network device may send the first indication information to the terminal device, to indicate the resource that is specially scheduled by the network device for the terminal device to send the data. This manner ensures accuracy of sending the first indication information by the network device. FIG. 7 is a schematic diagram of a structure of a network device according to an embodiment of this application. As shown in FIG. 7, the network device may include a processing module 11 and a sending module 12.

The processing module 11 is configured to detect, in a first time unit, a reference signal and/or data that are/is sent by a terminal device to the network device in a second time unit, where the second time unit is the same as or different from the first time unit. The sending module 12 is configured to: when the processing module detects the reference signal and/or the data in the first time unit, send first indication information in a third time unit after the first time unit, where the first indication information is used to indicate a resource for sending the data by the terminal device.

When the reference signal carries first information, and the first information is used to indicate that the reference signal is a reference signal sent by the terminal device to the network device for an N^{th} time, if the second time unit is less than a time unit in which the terminal device sends the reference signal to the network device for an L^{th} time, the third time unit is the time unit in which the terminal device sends the reference signal to the network device for the L^{th} time, or the third time unit is an X^{th} time unit after the time unit in which the terminal device sends the reference signal to the network device for the L^{th} time. If the second time unit is greater than or equal to a time unit in which the terminal device sends the reference signal to the network device for an Lth time, the third time unit is an X^{th} time unit after the first time unit, and both L and X are positive integers greater than or equal to 1.

When the reference signal carries second information, and the second information is used to indicate whether the reference signal is a reference signal sent by the terminal device to the network device for a first time, if the reference signal is a reference signal sent by the terminal device to the network device for the first time, the third time unit is a time unit in which the terminal device sends the reference signal to the network device for an L^{th} time, or the third time unit is an X^{th} time unit after the time unit in which the terminal device sends the reference signal to the network device for the L^{th} time, and both L and X are positive integers greater than or equal to 1. If the reference signal is not a reference signal sent by the terminal device to the network device for the first time, the third time unit is an M^{th} time unit after the first time unit, M is a positive integer greater than or equal to 1, and a value of M is the same as a value of L, or a value of M is a difference between L and 1.

When the reference signal does not carry any information about a quantity of sending times, the third time unit is an M^{th} time unit after the first time unit, and M is a positive integer greater than or equal to 1.

Optionally, the sending module 12 is further configured to send the first indication information to the terminal device, where the first indication information is further used to indicate that the network device correctly receives the data.

Optionally, the first time unit, the second time unit, and the third time unit are one of an orthogonal frequency division multiplexing OFDM symbol, a timeslot, a mini-slot, a subframe, and a frame.

The network device provided in this embodiment of this application may perform actions of the network device in the foregoing method embodiments. Implementation principles and technical effects thereof are similar. Details are not described herein again.

An embodiment of this application further provides a network device. The network device includes a sending module.

The sending module is configured to send first indication information; where the first indication information includes a first field and a second field, and when the first field indicates an identifier of data sent by a terminal device and the second field does not indicate a resource, the first indication information is used to indicate that the network device correctly receives the data; or when the first field is an identifier of data and the second field indicates a resource, the first indication information is used to instruct the terminal device to send the data on the resource.

The network device provided in this embodiment of this application may perform an action of sending first indication information by the network device in the foregoing method embodiments. Implementation principles and technical effects thereof are similar. Details are not described herein again.

An embodiment of this application further provides a network device. The network device includes a sending module.

The sending module is configured to send first indication information; where the first indication information includes a first field, and when the first field indicates an identifier of data sent by a terminal device, the first indication information is used to indicate a resource for sending the data by the terminal device; or when the first field is a preset value or indicates an identifier of data sent by another terminal device, the first indication information is used to indicate that the network device correctly receives the data.

The network device provided in this embodiment of this application may perform an action of sending first indication information by the network device in the foregoing method embodiments. Implementation principles and technical effects thereof are similar. Details are not described herein again.

FIG. 8 is a schematic diagram of a structure of a terminal device according to an embodiment of this application. As shown in FIG. 8, the terminal device may include a sending module 21 and a processing module 22.

The sending module 21 is configured to repeatedly send data and a reference signal to a network device.

The processing module 22 is configured to: after the sending module sends the data and the reference signal to the network device for an L^{th} time, detect first indication information sent by the network device, where the first indication information is used to indicate a resource for sending the data by the terminal device, and L is a positive integer greater than or equal to 1.

Optionally, the sending module 21 is further configured to retransmit the data and the reference signal when the processing module fails to detect the first indication information before a fourth time unit, where the fourth time unit is greater than a time unit in which the terminal device sends the data and the reference signal to the network device for the L^{th} time.

When the reference signal carries first information, and the first information is used to indicate that the reference signal is a reference signal sent by the terminal device to the network device for an N^{th} time, the fourth time unit is a time unit in which the terminal device sends the reference signal to the network device for a last time, or the fourth time unit is an X^{th} time unit after the time unit in which the terminal device sends the reference signal to the network device for the last time, and both N and X are positive integers greater than or equal to 1.

When the reference signal carries second information, and the second information is used to indicate whether the reference signal is a reference signal sent by the terminal device to the network device for a first time, the fourth time unit is an M^{th} time unit after a time unit in which the terminal device sends the reference signal to the network device for a last time, M is a positive integer greater than or equal to 1, and a value of M is the same as a value of L, or a value of M is a difference between L and 1.

When the reference signal does not carry any information about a quantity of sending times, the fourth time unit is an M^{th} time unit after a time unit in which the terminal device sends the reference signal to the network device for a last time, and M is a positive integer greater than or equal to 1.

Optionally, the processing module 22 is further configured to: when the first indication information is further used to indicate that the network device correctly receives the data, and after the sending module sends the data and the reference signal to the network device for a first time, detect the first indication information sent by the network device. Optionally, a transmit power used by the terminal device each time is greater than or equal to a transmit power used by the terminal device previous time; and the transmit power is a power for sending the reference signal, or the transmit power is a power for sending the reference signal and the data.

Optionally, a maximum quantity of times of retransmitting, by the terminal device, the data and the reference signal is greater than or equal to a quantity of times of repeatedly sending the data and the reference signal by the terminal device to the network device; and/or a transmit power used when the terminal device performs retransmission is greater than or equal to a transmit power used when the terminal device repeatedly performs sending. The transmit power is a power for sending the reference signal, or the transmit power is a power for sending the reference signal and the data.

Optionally, the fourth time unit is one of an orthogonal frequency division multiplexing OFDM symbol, a timeslot, a mini-slot, a subframe, and a frame.

The terminal device provided in this embodiment of this application may perform actions of the terminal device in the foregoing method embodiments. Implementation principles and technical effects thereof are similar. Details are not described herein again.

An embodiment of this application further provides a terminal device. The terminal device may include a receiving module.

The receiving module is configured to receive first indication information; where the first indication information includes a first field and a second field, and when the first field indicates an identifier of data sent by the terminal device and the second field does not indicate a resource, the first indication information is used to indicate that the network device correctly receives the data; or when the first field is an identifier of data and the second field indicates a resource, the first indication information is used to instruct the terminal device to send the data on the resource.

The terminal device provided in this embodiment of this application may perform an action of receiving first indication information by the terminal device in the foregoing method embodiments. Implementation principles and technical effects thereof are similar. Details are not described herein again.

An embodiment of this application further provides a terminal device. The terminal device may include a receiving module.

The receiving module is configured to receive first indication information; where the first indication information includes a first field, and when the first field indicates an identifier of data sent by the terminal device, the first indication information is used to indicate a resource for sending the data by the terminal device; or when the first field is a preset value or indicates an identifier of data sent by another terminal device, the first indication information is used to indicate that the network device correctly receives the data.

The terminal device provided in this embodiment of this application may perform an action of receiving first indication information by the terminal device in the foregoing method embodiments. Implementation principles and technical effects thereof are similar. Details are not described herein again.

An embodiment of this application further provides a terminal device. The terminal device may include a sending module.

The sending module is configured to repeatedly send data and a reference signal to a network device; where a transmit power used by the terminal device each time is greater than or equal to a transmit power used by the terminal device previous time. Optionally, the transmit power is a power for sending the reference signal, or the transmit power is a power for sending the reference signal and the data.

The terminal device provided in this embodiment of this application may perform actions of sending data and a reference signal by the terminal device in the foregoing method embodiments. Implementation principles and technical effects thereof are similar. Details are not described herein again.

An embodiment of this application further provides a terminal device. The terminal device may include a sending module.

The sending module is configured to send data and a reference signal to a network device for at least once.

The sending module is further configured to retransmit the data and the reference signal to the network device.

A maximum quantity of times of retransmitting, by the terminal device, the data and the reference signal is greater than or equal to a quantity of times of sending the data and the reference signal by the terminal device to the network device for at least once; and/or a transmit power used when the terminal device performs retransmission is greater than or equal to a transmit power used when the terminal device performs sending for at least once.

Optionally, the transmit power is a power for sending the reference signal, or the transmit power is a power for sending the reference signal and the data.

The terminal device provided in this embodiment of this application may perform actions of sending and retransmitting the data and the reference signal by the terminal device in the foregoing method embodiments. Implementation principles and technical effects thereof are similar. Details are not described herein again.

It should be noted that the sending module may be a transmitter during actual implementation, the receiving module may be a receiver during actual implementation, and the processing module may be implemented in a form of software invoked by a processing element, or may be implemented in a form of hardware. For example, the processing module may be an independently disposed processing element, or may be integrated into a chip of the foregoing device for implementation. In addition, the processing module may be stored in a memory of the foregoing device in a form of program code, and invoked by a processing element of the foregoing device to perform the functions of the processing module. In addition, all or some of the modules may be integrated together, or may be separately implemented. The processing element herein may be an integrated circuit with a signal processing capability. In an implementation process, steps in the foregoing methods or the foregoing modules may be implemented by using a hardware integrated logical circuit in the processing processor element, or by using instructions in a form of software.

For example, the foregoing modules may be configured as one or more integrated circuits implementing the foregoing methods, for example, one or more application-specific integrated circuits (Application Specific Integrated Circuit, ASIC), one or more microprocessors (digital signal processor, DSP), or one or more field programmable gate arrays (Field Programmable Gate Array, FPGA). For another example, when a specific module is implemented in a form of scheduling program code by a processing element, the processing element may be a general purpose processor, for example, a central processing unit (Central Processing Unit, CPU for short) or another processor that may invoke the program code. For another example, these modules may be integrated and implemented in a form of a system-on-a-chip (system-on-a-chip, SOC for short).

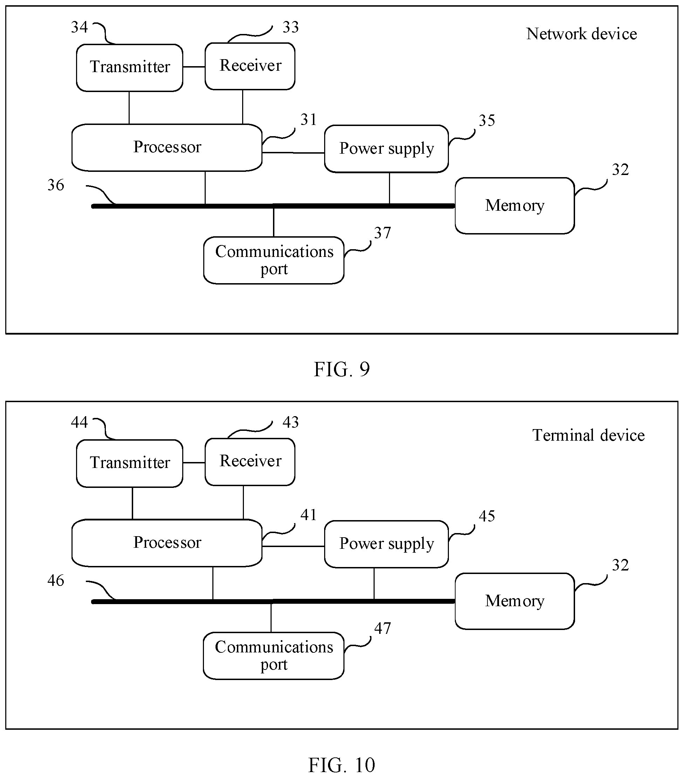

FIG. 9 is a schematic diagram of a structure of another network device according to an embodiment of this application. As shown in FIG. 9, the network device may include a processor 31 (for example, a CPU), a memory 32, a receiver 33, and a transmitter 34. Both the receiver 33 and the transmitter 34 are coupled to the processor 31. The processor 31 controls a receiving action of the receiver 33 and controls a sending action of the transmitter 34. The memory 32 may include a high-speed RAM memory, or may further include a non-volatile memory NVM, for example, at least one magnetic disk memory. The memory 32 may store various instructions, to implement processing functions and method steps of this embodiment of this application. Optionally, the network device in this application may further include a power supply 35, a communications bus 36, and a communications port 37. The receiver 33 and the transmitter 34 may be integrated into a transceiver of the network device, or may be independent transceiver antennas of the network device. The communications bus 36 is configured to implement communication and connection between elements. The communications port 37 is configured to implement connection and communication between the network device and another peripheral.

In this embodiment of this application, the memory 32 is configured to store computer-executable program code, where the program code includes an instruction. When the processor 31 executes the instruction, the processor 31 executes a processing action in the foregoing method embodiments, the receiver 33 executes a receiving action in the foregoing method embodiments, and the transmitter 34 executes a sending action in the foregoing method embodiments. Implementation principles and technical effects thereof are similar. Details are not described herein again.

FIG. 10 is a schematic diagram of a structure of another terminal device according to an embodiment of this application. As shown in FIG. 10, the terminal device may include a processor 41 (for example, a CPU), a memory 42, a receiver 43, and a transmitter 44. Both the receiver 43 and the transmitter 44 are coupled to the processor 41. The processor 41 controls a receiving action of the receiver 43 and a sending action of the transmitter 44. The memory 42 may include a high-speed RAM memory, or may further include a non-volatile memory NVM, for example, at least one magnetic disk memory. The memory 42 may store various instructions, to implement processing functions and method steps of this embodiment of this application. Optionally, the terminal device in this embodiment of this application may further include a power supply 45, a communications bus 46, and a communications port 47. The receiver 43 and the transmitter 44 may be integrated into a transceiver of the terminal device, or may be independent transceiver antennas of the terminal device. The communications bus 46 is configured to implement communication and connection between elements. The communications port 47 is configured to implement connection and communication between the terminal device and another peripheral.

In this embodiment of this application, the memory 42 is configured to store computer-executable program code, where the program code includes an instruction. When the processor 41 executes the instruction, the processor 41 executes a processing action in the foregoing method embodiments, the receiver 43 executes a receiving action in the foregoing method embodiments, and the transmitter 44 executes a sending action in the foregoing method embodiments. Implementation principles and technical effects thereof are similar. Details are not described herein again.

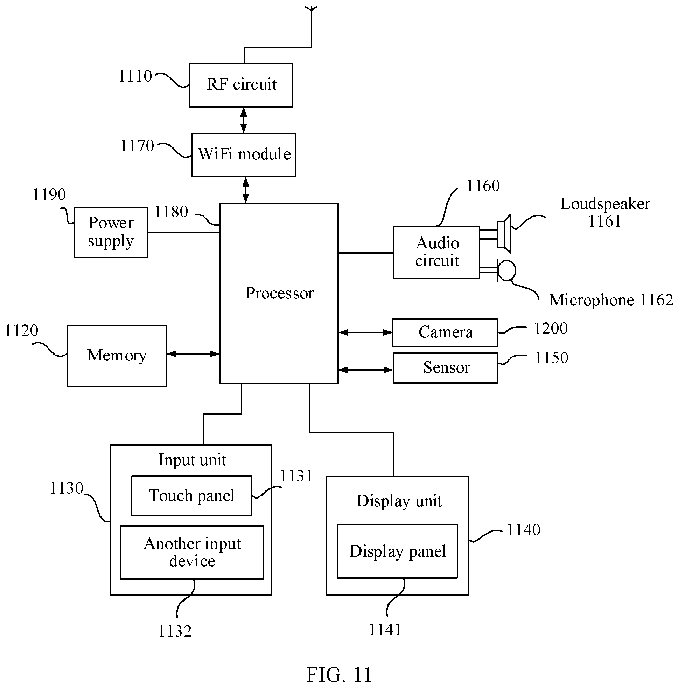

As described in the foregoing embodiments, the terminal device in the embodiments of this application may be a wireless terminal such as a mobile phone or a tablet computer. An example is used in which the terminal device is a mobile phone. FIG. 11 is a block diagram of a structure of a terminal device that is a mobile phone according to an embodiment of this application. As shown in FIG. 11, the mobile phone may include components such as a radio frequency (Radio Frequency, RF) circuit 1110, a memory 1120, an input unit 1130, a display unit 1140, a sensor 1150, an audio circuit 1160, a wireless fidelity (wireless fidelity, WiFi) module 1170, a processor 1180, and a power supply 1190. A person skilled in the art may understand that a structure of a mobile phone shown in FIG. 11 constitutes no limitation on the mobile phone, and the mobile phone may include more or fewer components than those shown in the figure, may combine some components, or may have a different component arrangement.

The following describes the components of the mobile phone in detail with reference to FIG. 11.

The RF circuit 1110 may be configured to receive and send signals in an information receiving and sending process or a call process. For example, after receiving downlink information from a base station, the RF circuit 1110 sends the downlink information to a processor 1180 for processing; and sends uplink data to the base station. Usually, the RF circuit includes but is not limited to an antenna, at least one amplifier, a transceiver, a coupler, a low noise amplifier (Low Noise Amplifier, LNA), a duplexer, and the like. In addition, the RF circuit 1110 may further communicate with a network and another device through wireless communications. The wireless communications may use any communications standard or protocol, including but not limited to global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Message Service, SMS), and the like.

The memory 1120 may be configured to store a software program and a module. The processor 1180 executes various function applications of the mobile phone and data processing by running the software program and the module that are stored in the memory 1120. The memory 1120 may mainly include a program storage area and a data storage area. The program storage area may store an operating system, an application required by at least one function (such as a voice playing function and an image playing function), and the like. The data storage area may store data (such as audio data and a phone book) that is created based on use of the mobile phone, and the like. In addition, the memory 1120 may include a high speed random access memory, and may further include a nonvolatile memory such as at least one magnetic disk storage component, a flash memory, or another volatile solid-state storage component.

The input unit 1130 may be configured to: receive entered digital or character information, and generate key signal input related to user setting and function control of the mobile phone. Specifically, the input unit 1130 may include a touch panel 1131 and another input device 1132. The touch panel 1131, also referred to as a touchscreen, can collect a touch operation performed by a user on or near the touch panel 1131 (for example, an operation performed by the user on or near the touch panel 1131 by using any proper object or accessory such as a finger or a stylus), and can drive a corresponding connection apparatus based on a preset program. Optionally, the touch panel 1131 may include two parts: a touch detection apparatus and a touch controller. The touch detecting apparatus detects a touch direction of the user, detects a signal brought by the touch operation, and transfers the signal to the touch controller, and the touch controller receives touch information from the touch detecting apparatus, converts the touch information into coordinates of a touch point, sends the coordinates to the processor 1180, and can receive and execute a command sent by the processor 1180. In addition, the touch panel 1131 may be implemented by using a plurality of types such as a resistive type, a capacitive type, an infrared type, and a surface acoustic wave type. In addition to the touch panel 1131, the input unit 1130 may further include another input device 1132. Specifically, the another input device 1132 may include but is not limited to one or more of a physical keyboard, a function key (for example, a volume control key or an on/off key), a trackball, a mouse, a joystick, or the like.

The display unit 1140 may be configured to display information entered by the user or information provided for the user, and various menus of the mobile phone. The display unit 1140 may include a display panel 1141. Optionally, a form such as a liquid crystal display (Liquid Crystal Display, LCD) or an organic light-emitting diode (Organic Light-Emitting Diode, OLED) may be used to configure the display panel 1141. Further, the touch panel 1131 may cover the display panel 1141. When detecting a touch operation on or near the touch panel 1131, the touch panel 1131 transfers the touch operation to the processor 1180 to determine a type of a touch event, and then the processor 1180 provides corresponding visual output on the display panel 1141 based on the type of the touch event. In FIG. 10, the touch panel 1131 and the display panel 1141 are used as two independent components to implement input and input functions of the mobile phone. However, in some embodiments, the touch panel 1131 and the display panel 1141 may be integrated to implement the input and output functions of the mobile phone.

The mobile phone may further include at least one sensor 1150, such as an optic sensor, a motion sensor, and another sensor. Specifically, the light sensor may include an ambient light sensor and a proximity sensor. The ambient light sensor may adjust luminance of the display panel 1141 based on brightness of ambient light, and when the mobile phone approaches an ear, the light sensor may turn off the display panel 1141 and/or backlight. As a type of motion sensor, an acceleration sensor may detect values of acceleration in directions (usually three axes), may detect, in a static state, a value and a direction of gravity, and may be used for an application that identifies a posture (such as screen switching between a landscape mode and a portrait mode, a related game, and magnetometer posture calibration) of the mobile phone, a vibration-identification-related function (such as a pedometer and tapping), and the like. Other sensors that can be configured on the mobile phone such as a gyroscope, a barometer, a hygrometer, a thermometer, and an infrared sensor are not described herein.

The audio circuit 1160, a loudspeaker 1161, and a microphone 1162 may provide an audio interface between the user and the mobile phone. The audio circuit 1160 may transmit, to the loudspeaker 1161, an electrical signal that is obtained after conversion of received audio data, and the loudspeaker 1161 converts the electrical signal into an acoustic signal and outputs the acoustic signal. In addition, the microphone 1162 converts a collected acoustic signal into an electrical signal, the audio circuit 1160 receives and converts the electrical signal into audio data, and outputs the audio data to the processor 1180 for processing, and then processed audio data is sent to, for example, another mobile phone, by using the RF circuit 1110, or the audio data is output to the memory 1120 for further processing.

WiFi belongs to a short-distance wireless transmission technology. The mobile phone may help, by using the WiFi module 1170, the user receive and send an email, browse a web page, access streaming media, and the like. The WiFi module 1170 provides wireless broadband Internet access for the user. Although the WiFi module 1170 is shown in FIG. 11, it should be understood that the WiFi module 1170 is not a necessary component of the mobile phone, and may be omitted based on a requirement without changing the essence of this embodiment of this application.

The processor 1180 is a control center of the mobile phone, connects each part of the entire mobile phone by using various interfaces and lines, and executes various functions and processes data of the mobile phone by running or executing the software program and/or the module stored in the memory 1120 and invoking data stored in the memory 1120, to perform overall monitoring on the mobile phone. Optionally, the processor 1180 may include one or more processing units. For example, an application processor and a modem processor may be integrated into the processor 1180, where the application processor mainly processes an operating system, a user interface, an application program, or the like; and the modem processor mainly processes wireless communication. It can be understood that the modem processor may alternatively not be integrated into the processor 1180.

The mobile phone further includes the power supply 1190 (such as a battery) that supplies power to each component. Optionally, the power supply may be logically connected to the processor 1180 by using a power management system, so that functions such as management of charging, discharging, and power consumption are implemented by using the power management system.

The mobile phone may further include a camera 1200. The camera may be a front-facing camera or a rear-facing camera. Although not shown, the mobile phone may further include, for example, a Bluetooth module and a GPS module. Details are not described herein again.

In this embodiment of the present invention, the processor 1180 included in the mobile phone may be configured to execute the foregoing communication method embodiment. Implementation principles and technical effects thereof are similar. Details are not described herein again.

All or some of the foregoing embodiments may be implemented by means of software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or a part of the procedures or functions in the embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any available medium accessible to a computer, or a data storage device, such as a server or a data center, integrating one or more available media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A communication method in a 5G communications system supporting a grant-free transmission manner of uplink data, comprising:
detecting, by a network device in a first time unit, a reference signal and/or data that are/is sent by a terminal device to the network device in a second time unit; and
sending, by the network device, first indication information in a third time unit after the first time unit, wherein the first indication information is used to indicate a resource for sending the data by the terminal device;
wherein the reference signal carries first information, the first information is used to indicate that the reference signal is a reference signal sent by the terminal device to the network device for an N^{th} time, and N is a positive integer greater than or equal to 1; and if the second time unit is less than a time unit in which the terminal device sends the reference signal to the network device for an L^{th} time, the third time unit is the time unit in which the terminal device sends the reference signal to the network device for the L^{th} time, or the third time unit is an X^{th} time unit after the time unit in which the terminal device sends the reference signal to the network device for the L^{th} time; or if the second time unit is greater than or equal to a time unit in which the terminal device sends the reference signal to the network device for an L^{th} time, the third time unit is an X^{th} time unit after the first time unit, and both L and X are positive integers greater than or equal to 1;
or
wherein the reference signal carries second information, and the second information is used to indicate whether the reference signal is a reference signal sent by the terminal device to the network device for a first time; and if the reference signal is a reference signal sent by the terminal device to the network device for the first time, the third time unit is a time unit in which the terminal device sends the reference signal to the network device for an L^{th} time, or the third time unit is an X^{th} time unit after the time unit in which the terminal device sends the reference signal to the network device for the L^{th} time, and both L and X are positive integers greater than or equal to 1; or if the reference signal is not a reference signal sent by the terminal device to the network device for the first time, the third time unit is an M^{th} time unit after the first time unit, M is a positive integer greater than or equal to 1, and a value of M is the same as a value of L, or a value of M is a difference between L and 1.

2. The method according to claim 1,
wherein the second time unit is the same as or different from the first time unit; or
wherein the method further comprises: sending, by the network device, the first indication information to the terminal device, wherein the first indication information is further used to indicate that the network device correctly receives the data; or
wherein the first time unit, the second time unit, and the third time unit are one of an orthogonal frequency division multiplexing ,OFDM symbol, a timeslot, a mini-slot, a subframe, and a frame.

3. The method according to claim 1 or 2, wherein the third time unit is an M^{th} time unit after the first time unit, and M is a positive integer greater than or equal to 1.

4. A network device in a 5G communications system supporting a grant-free transmission manner of uplink data, comprising: a processor (31, 41), a memory (32, 42), a transmitter (34, 44), and a receiver (33, 43), wherein both the transmitter (34, 44) and the receiver (33, 43) are coupled to the processor (31, 41), the processor (31, 41) controls a sending action of the transmitter (34, 44), and the processor (31, 41) controls a receiving action of the receiver (33, 43); and
the memory (32, 42) is configured to store computer executable program code, and the program code comprises an instruction; and when the processor (31, 41) executes the instruction, the instruction enables the network device to perform the communication method according to any one of claims 1 to 3.

## Patentansprüche

1. Kommunikationsverfahren in einem 5G-Kommunikationssystem, das eine erteilungsfreie Übertragungsart von Uplink-Daten unterstützt, das Folgendes umfasst:
Erfassen, durch eine Netzwerkvorrichtung in einer ersten Zeiteinheit, eines Referenzsignals und/oder von Daten, das/die durch ein Endgerät in einer zweiten Zeiteinheit an die Netzwerkvorrichtung gesendet wird/werden; und
Senden, durch die Netzwerkvorrichtung, von ersten Anzeigeinformationen in einer dritten Zeiteinheit nach der ersten Zeiteinheit, wobei die ersten Anzeigeinformationen verwendet werden, um eine Ressource zum Senden der Daten durch das Endgerät anzuzeigen;
wobei das Referenzsignal erste Informationen trägt, die ersten Informationen verwendet werden, um anzuzeigen, dass das Referenzsignal ein Referenzsignal ist, das durch das Endgerät ein N^{-tes} Mal an die Netzwerkvorrichtung gesendet wird, und N eine positive ganze Zahl größer als oder gleich 1 ist; und falls die zweite Zeiteinheit kleiner als eine Zeiteinheit ist, in der das Endgerät das Referenzsignal zum L^{-ten} Mal an die Netzwerkvorrichtung sendet, die dritte Zeiteinheit die Zeiteinheit ist, in der das Endgerät das Referenzsignal zum L^{-ten} Mal an die Netzwerkvorrichtung sendet, oder die dritte Zeiteinheit eine x^{-te} Zeiteinheit nach der Zeiteinheit ist, in der das Endgerät das Referenzsignal zum L^{-ten} Mal an die Netzwerkvorrichtung sendet; oder falls die zweite Zeiteinheit größer als oder gleich einer Zeiteinheit ist, in der das Endgerät das Referenzsignal zum L^{-ten} Mal an die Netzwerkvorrichtung sendet, die dritte Zeiteinheit eine x^{-te} Zeiteinheit nach der ersten Zeiteinheit ist, und sowohl L als auch X positive ganze Zahlen größer als oder gleich 1 sind;
oder
wobei das Referenzsignal zweite Informationen trägt und die zweiten Informationen verwendet werden, um anzuzeigen, ob das Referenzsignal ein Referenzsignal ist, das durch das Endgerät zu einem ersten Mal an die Netzwerkvorrichtung gesendet wird; und falls das Referenzsignal ein Referenzsignal ist, das durch das Endgerät zum ersten Mal an die Netzwerkvorrichtung gesendet wird, die dritte Zeiteinheit eine Zeiteinheit ist, in der das Endgerät das Referenzsignal zum L^{-ten} Mal an die Netzwerkvorrichtung sendet, oder die dritte Zeiteinheit eine X^{-te} Zeiteinheit nach der Zeiteinheit ist, in der das Endgerät das Referenzsignal zum L^{-ten} Mal an die Netzwerkvorrichtung sendet, und sowohl L als auch X positive ganze Zahlen größer als oder gleich 1 sind; oder falls das Referenzsignal nicht ein Referenzsignal ist, das durch das Endgerät zum ersten Mal an die Netzwerkvorrichtung gesendet wird, die dritte Zeiteinheit eine M^{-te} Zeiteinheit nach der ersten Zeiteinheit ist, M eine positive ganze Zahl größer als oder gleich 1 ist, und ein Wert von M derselbe wie ein Wert von L ist, oder ein Wert von M ein Unterschied zwischen L und 1 ist.

2. Verfahren nach Anspruch 1,
wobei die zweite Zeiteinheit dieselbe wie die erste Zeiteinheit ist oder sich von ihr unterscheidet; oder
wobei das Verfahren ferner Folgendes umfasst: Senden, durch die Netzwerkvorrichtung, der ersten Anzeigeinformationen an das Endgerät, wobei die ersten Anzeigeinformationen ferner verwendet werden, um anzuzeigen, dass die Netzwerkvorrichtung die Daten korrekt empfängt; oder
wobei die erste Zeiteinheit, die zweite Zeiteinheit und die dritte Zeiteinheit ein Symbol eines orthogonalen Frequenzmultiplexverfahrens (orthogonal frequency division multiplexing - OFDM), ein Zeitschlitz, ein Minischlitz, ein Unterrahmen oder ein Rahmen sind.

3. Verfahren nach Anspruch 1 oder 2, wobei die dritte Zeiteinheit eine M^{-te} Zeiteinheit nach der ersten Zeiteinheit ist und M eine positive ganze Zahl größer als oder gleich 1 ist.

4. Netzwerkvorrichtung in einem 5G-Kommunikationssystem, das eine erteilungsfreie Übertragungsart von Uplink-Daten unterstützt, die Folgendes umfasst: einen Prozessor (31, 41), einen Speicher (32, 42), eine Übertragungseinrichtung (34, 44) und einen Empfänger (33, 43), wobei sowohl die Übertragungseinrichtung (34, 44) als auch der Empfänger (33, 43) mit dem Prozessor (31, 41) gekoppelt sind, der Prozessor (31, 41) eine Sendeaktion der Übertragungseinrichtung (34, 44) steuert, und der Prozessor (31, 41) eine Empfangsaktion des Empfängers (33, 43) steuert; und
der Speicher (32, 42) konfiguriert ist, um computerausführbaren Programmcode zu speichern, und der Programmcode eine Anweisung umfasst; und wenn der Prozessor (31, 41) die Anweisung ausführt, die Anweisung die Netzwerkvorrichtung aktiviert, um das Kommunikationsverfahren nach einem der Ansprüche 1 bis 3 durchzuführen.

## Revendications

1. Procédé de communication dans un système de communications 5G prenant en charge un mode de transmission sans autorisation de données de liaison montante, comprenant :
la détection, par un dispositif réseau dans une première unité de temps, d'un signal de référence et/ou de données qui sont/est envoyé(s) par un dispositif terminal au dispositif réseau dans une deuxième unité de temps ; et
l'envoi, par le dispositif réseau, de premières informations d'indication dans une troisième unité de temps après la première unité de temps, les premières informations d'indication étant utilisées pour indiquer une ressource servant à envoyer les données par le dispositif terminal ;
dans lequel le signal de référence transporte des premières informations, les premières informations sont utilisées pour indiquer que le signal de référence est un signal de référence envoyé par le dispositif terminal au dispositif réseau pendant une N^{ème} fois, et N est un entier positif supérieur ou égal à 1 ; et si la deuxième unité de temps est inférieure à une unité de temps dans laquelle le dispositif terminal envoie le signal de référence au dispositif réseau pendant une L^{ème} fois, la troisième unité de temps est l'unité de temps dans laquelle le dispositif terminal envoie le signal de référence au dispositif réseau pour la L^{ème} fois, ou la troisième unité de temps est une X^{ème} unité de temps après l'unité de temps dans laquelle le dispositif terminal envoie le signal de référence au dispositif réseau pour la L^{ème} fois ; ou si la deuxième unité de temps est supérieure ou égale à une unité de temps dans laquelle le dispositif terminal envoie le signal de référence au dispositif réseau pour une L^{ème} fois, la troisième unité de temps est une X^{ème} unité de temps après la première unité de temps, et les deux L et X sont des entiers positifs supérieurs ou égaux à 1 ;
ou
dans lequel le signal de référence transporte des secondes informations, et les secondes informations sont utilisées pour indiquer si le signal de référence est un signal de référence envoyé par le dispositif terminal au dispositif réseau pour une première fois ; et si le signal de référence est un signal de référence envoyé par le dispositif terminal au dispositif réseau pour la première fois, la troisième unité de temps est une unité de temps dans laquelle le dispositif terminal envoie le signal de référence au dispositif réseau pour une L^{ème} fois, ou la troisième unité de temps est une X^{ème} unité de temps après l'unité de temps dans laquelle le dispositif terminal envoie le signal de référence au dispositif réseau pour la L^{ème} fois, et L et X sont tous deux des entiers positifs supérieurs ou égaux à 1 ; ou si le signal de référence n'est pas un signal de référence envoyé par le dispositif terminal au dispositif réseau pour la première fois, la troisième unité de temps est une M^{ème} unité de temps après la première unité de temps, M est un entier positif supérieur ou égal à 1, et une valeur de M est identique à une valeur de L, ou une valeur de M est une différence entre L et 1.

2. Procédé selon la revendication 1,
dans lequel la deuxième unité de temps est identique ou différente de la première unité de temps ; ou
dans lequel le procédé comprend en outre : l'envoi, par le dispositif réseau, des premières informations d'indication au dispositif terminal, les premières informations d'indication étant en outre utilisées pour indiquer que le dispositif réseau reçoit correctement les données ; ou
dans lequel la première unité de temps, la deuxième unité de temps et la troisième unité de temps font partie d'un multiplexage par répartition orthogonale de la fréquence, d'un symbole OFDM, d'un intervalle de temps, d'un mini-intervalle, d'une sous-trame et d'une trame.

3. Procédé selon la revendication 1 ou 2, dans lequel la troisième unité de temps est une M^{ème} unité de temps après la première unité de temps, et M est un entier positif supérieur ou égal à 1.

4. Dispositif réseau dans un système de communications 5G prenant en charge un mode de transmission sans autorisation de données de liaison montante, comprenant : un processeur (31, 41), une mémoire (32, 42), un émetteur (34, 44) et un récepteur (33, 43), l'émetteur (34, 44) et le récepteur (33, 43) étant tous deux couplés au processeur (31, 41), le processeur (31, 41) commandant une action d'envoi à partir de l'émetteur (34, 44), et le processeur (31, 41) commandant une action de réception du récepteur (33, 43) ; et
la mémoire (32, 42) est configurée pour stocker un code de programme exécutable par ordinateur, et le code de programme comprend une instruction ; et lorsque le processeur (31, 41) exécute l'instruction, l'instruction permet au dispositif réseau d'exécuter le procédé de communication selon l'une quelconque des revendications 1 à 3.
